# EUROPEAN PATENT SPECIFICATION

(11) **EP 3 896 372 B1**
(45) Date of publication and mention of the grant of the patent: **02.08.2023**
(21) Application number: 21168885.8
(22) Date of filing: 16.04.2021
(51) Int. Cl.: F25D 23/02, F25D 29/00

(54) **REFRIGERATOR**
KÜHLSCHRANK
RÉFRIGÉRATEUR

(30) Priority: 17.04.2020 KR 20200046626
(43) Date of publication of application: 20.10.2021
(73) Proprietor: LG Electronics Inc., Seoul 07336 (KR)
(72) Inventor: KANG, Chanuk, 08592 Seoul (KR); CHEON, Sanghyun, 08592 Seoul (KR)
(74) Representative: Ter Meer Steinmeister & Partner

(56) References cited:
- EP-A1- 3 327 386
- EP-A1- 3 333 517
- EP-A1- 3 378 359
- EP-A1- 3 524 908
- KR-A- 20200 006 605

## Description

### BACKGROUND

The present disclosure relates to a refrigerator.

In general, refrigerators refer to home appliances in which food may be stored in an internal storage space, which is shielded by a door, at a low temperature. For this, the refrigerator is configured to accommodate the stored food in an optimum state by cooling the internal storage space using cold air generated through heat exchange with a refrigerant circulating in a refrigeration cycle.

In recent years, refrigerators have become increasingly multi-functional with changes of dietary lives and gentrification of products, and refrigerators having various structures and convenience devices for convenience of users and for efficient use of internal spaces have been released.

The storage space of the refrigerator may be opened/closed by the door. Also, refrigerators may be classified into various types according to an arranged configuration of the storage space and a structure of the door that opens and closes the storage space.

In general, the refrigerator has a problem in that when the door is not opened, internal food may not be identified. That is, the door should be opened to identify whether desired food is received in a space in the refrigerator or in a separate storage space provided in the door. Further, when a user does not exactly know where the food is stored, an opening time of the door may increase or the number of times the door is opened may increase. At this time, unnecessary outflow of cold air may occur.

In recent years, to solve such a limitation, a refrigerator has been developed while allows a portion of a door thereof to be transparent or allows the inside thereof to be visible from the outside.

In Korean Patent Publication No. 10-2018-0067391, a panel assembly through which the inside of a refrigerator is visible and on which a screen is output is provided on a door of the refrigerator. Also, a structure in which a PCB controlling an operation of the panel assembly is provided on an end of the door is disclosed.

However, in the refrigerator having the above-described structure, to dispose a cable connecting a display to the PCB, an insulator is not filled in a space above the panel assembly, thereby deteriorating insulation performance.

EP 3 524 908 A1 presents a refrigerator that includes a cabinet defining a storage space, a door opening and closing the storage space, a transparent panel assembly which is disposed on at least one area of the door and on which a see-through part through which an interior of the refrigerator is seen is disposed, and a first light disposed closer to the interior of the refrigerator than the transparent panel assembly to brighten an area that is viewed by the see-through part. The transparent panel assembly includes a plurality of transparent panels spaced apart from each other to define an accommodation space, a transparent display disposed in the accommodation space to output a screen, and a second light brightening the display within the accommodation space. The display, the first light, and the second light are selectively turned off according to manipulation of a user so as to be converted into an opaque state in which the interior of the refrigerator is not seen and a transparent state in which the interior of the refrigerator is seen, and in the transparent state, a screen is outputted while an inner space of the refrigerator is seen. This document discloses all the features of the preamble of claim 1.

EP 3 378 359 A1 relates to a refrigerator that includes a cabinet, a door, an outer plate defining a front surface of the door and having an opening formed therein to pass through the door, a door liner defining a rear surface of the door, lighting members configured to illuminate storage spaces of the door and the cabinet, a transparent panel assembly mounted to shield the opening and allowing the storage spaces to be selectively seen according to an ON/OFF state of the lighting members, an insulator filled between the outer plate and the door liner, and a blocking part arranged inside the door along a periphery of the transparent panel assembly and detachably coupled to a peripheral surface of the transparent panel assembly to fix the transparent panel assembly.

EP 3 327 386 A1 provides a refrigerator in which a transparent display assembly and electric modules, which are disposed in a door to see through a storage space and to output an image, are easily connected to a control unit provided in a cabinet and guided through a narrow door hinge.

EP 3 333 517 A1 provides a refrigerator comprising a cabinet, a door wherein the door includes: an outer plate, a door liner defining a rear surface of the door, the rear surface having a liner opening; a frame disposed in between the outer plate and the door liner along a circumference of the plate opening, wherein the frame has a barrier part partitioning a space between the outer plate and the door liner into a first and a second space; a transparent display assembly seated on the frame; a cap deco defining a top surface of the door; an insulation material filling the first space between the outer plate and the frame; and a PCB configured for controlling operation of the transparent display assembly.

KR 2020 0006605 A presents a refrigerator that enables at least a portion of a refrigerator door to be selectively transparent by user operation.

### SUMMARY

It is an object of the present disclosure to provide a refrigerator capable of maintaining insulation performance of a refrigerator door in which a panel assembly through which the inside of the refrigerator is visible and on which a screen is output is disposed.

It is an object of the present disclosure to provide a refrigerator in which wires of a panel assembly provided in a door are easily arranged, and assembly and service workability are improved.

It is an object of the present disclosure to provide a refrigerator in which a cable configured to connect a panel assembly to a PCB is prevented from being damaged.

It is an object of the present disclosure to provide a refrigerator in which an arranged space of a cable configured to connect a display to a PCB, which are provided in a door is secured while satisfying insulation of the door.

One or more objects of the present technique are achieved by the invention set out by the features of the independent claim 1.

The refrigerator according to the invention may include one or more of the following preferred features:
The panel assembly may be disposed within the plate opening. The frame may connect the outer plate and the panel assembly, in particular a front panel of the panel assembly, to each other
The insulator may be between the door liner and the frame cover (or cover sheet). The insulator may be formed of a foam liquid, i.e. by injecting a foam liquid between the door liner and the frame cover (or cover sheet), or may be a molded insulator.

The panel assembly mounting part may surround a frame opening in which the panel assembly is inserted. The panel assembly mounting part of the frame may extend perpendicular to a front panel of the panel assembly and/or to the front surface of the door.

The cable guide part may be recessed from a front surface of the frame to accommodate the cable. The front surface of the frame may be a panel support part supporting the front panel of the panel assembly. The front surface of the frame may extend parallel to the front surface of the door. The panel support part may extend perpendicular to the panel assembly mounting part.

The cable may extend between a front panel of the panel assembly and the frame, in particular a panel support part of the frame. The front panel of the panel assembly may be formed flush or at level with the outer plate and/or form one surface with the outer plate.

A gasket (sub gasket) may be provided on the door liner which surrounds an area including the liner opening. The panel assembly may be disposed within the area surrounded by the gasket. The PCB accommodating space may be disposed outside the area surrounded by the gasket. The gasket may be disposed adjacent to the barrier.

The frame may be or include an upper frame that is disposed at an upper end of the door. The PCB accommodating space may be disposed at an upper portion in the door.

A cable inlet which passes through the frame to communicate with the inside of the frame cover and through which the cable passes may be provided in the cable guide part.

A guide wall extending from the barrier and protruding along an inner circumference of the frame cover may be disposed on the frame. The cable inlet may be disposed inside the guide wall.

A cable outlet opened so that the cable passes may be provided in the barrier. The cable outlet may be configured to communicate with the inside of the frame cover.

The barrier may extend from one end to the other end of the frame. The barrier may be constituted by a pair of ribs to define a barrier groove between the ribs. A liner coupling part inserted into the barrier groove so as to be coupled to the barrier may be disposed on the door liner.

A pair of cover ribs connected to the barrier at a position corresponding to the cable outlet may be disposed on the frame cover. The liner coupling part may be inserted together into the barrier groove and the cover rib.

A plurality of reinforcement ribs extending in a protruding direction of the barrier may be disposed on a bottom surface of the barrier.

A bent plate part bent backward along a circumference of the plate opening may be disposed on the outer plate. A plate accommodating groove which is recessed along the circumference of the panel assembly and into which the bent plate part is inserted may be defined in a front surface of the frame.

The frame cover may include: a cover body recessed to define a space in which the cable is accommodated; and a cover edge disposed along a circumference of the cover body and mounted on a rear surface of the frame to pass through the plate accommodating groove. A recess that is recessed in a corresponding shape to be coupled to the plate accommodating groove may be defined in the cover edge.

The panel assembly may include a front panel configured to define a front surface of the panel assembly and shield the plate opening. The panel assembly may include a rear panel spaced apart from the front panel to define a rear surface of the panel assembly, the rear panel being configured to shield the liner opening. The panel assembly may further include an outer frame configured to connect the front panel to the rear panel and define a circumferential surface of the panel assembly. The display may be provided between the front panel and the rear panel. The cable may be connected to the display to pass and extend between the front panel and the outer frame.

The panel assembly may further include a touch screen configured to sense touch of the front panel by a user on a rear surface of the front panel. The cable may further include a touch cable connected to the touch screen.

The panel assembly may further include: a light guide plate disposed behind the display to illuminate the display; and a display light provided on the outer frame to irradiate light onto the light guide plate. The cable may further include a light cable connected to the display light.

The front panel may have a size greater than that of each of the rear panel and a circumference of the display. The cable may be disposed along a rear surface of the front panel.

The front panel may include: a see-through part of which the inside is visible at a position corresponding to the display; and an opaque bezel disposed on a circumference of the see-through part, wherein the cable may be disposed to pass through the bezel.

The frame may further include a panel support part extending to the outside of the panel assembly mounting part and configured to support the front panel at a rear side. The cable inlet may be provided in the panel support part.

The refrigerator may further include: an upper cap decoration coupled to an upper end of each of the outer plate and the door liner to define a top surface of the door; and a decoration cover configured to open and close a decoration opening defined in a top surface of the upper cap decoration. The decoration opening may communicate with the PCB accommodating space.

The decoration cover may include a shielding part configured to shield the decoration opening. The decoration cover may include a PCB mounting part which extends downward from the shielding part and on which the PCB is mounted. When the decoration cover is mounted to shield the decoration opening, the PCB may be disposed inside the PCB accommodation space.

The cable may include a flexible flat cable.

The door may include: a main door which is configured to open and close the storage space and in which an opening is defined; and a sub-door configured to open and close the opening, wherein the sub-door may include the outer plate, the door liner, the panel assembly, the insulator, and the frame.

The following effects may be expected in the refrigerator according to the proposed embodiments of the present invention.

According to the embodiment, the insulator may be evenly filled around the transparent panel assembly provided in the door, and in particular, the insulator may also be filled in the region, through which the cable configured to connect the panel assembly to the PCB passes, to maintain the insulation performance of the door.

Particularly, the insulator may be molded through the injection of the foam liquid, and the space along through the cable is guided may be separated from the space, in which the insulator is formed, by the frame and the frame cover to prevent the cable from being damaged or contaminated while the high-temperature foam liquid is injected. Thus, the damage of the cable may be prevented while securing the insulation performance of the insulator.

In addition, the cable may be guided to the PCB accommodating space accommodating space defined in the upper end of the door through the cable accommodating space provided by the frame cover. Therefore, the assembly workability, the productivity, and the serviceability may be improved by being easily connected to the PCB disposed in the PCB accommodating space.

Particularly, the PCB connector may be provided on the PCB, and the cable provided in the flexible film cable (FFC) type may be inserted into the PCB connector, and thus, the connection between the PCB and the cable may be more easily performed.

In addition, the PCB may be mounted on the decoration cover provided on the upper cap decoration on the top surface of the door. Therefore, the PCB may be easily mounted and separated to be easily connected to the cable, thereby further improving the assembliability and serviceability.

In addition, the arrangement structure in which the cable does not interfere with the plate accommodating groove into which the end of the outer plate defining the front surface of the door is inserted may be provided. Therefore, the moving path of the cable may be secured while maintaining the state of the outer appearance of the front surface of each of the outer plate and the panel assembly.

### BRIEF DESCRIPTION OF THE DRAWINGS

FIG. 1 is a perspective view of a refrigerator according to an embodiment.
FIG. 2 is a perspective view of the refrigerator with a sub-door opened.
FIG. 3 is a perspective view of the refrigerator with a main door opened.
FIG. 4 is a front perspective view of the sub-door.
FIG. 5 is a front perspective view of the sub-door.
FIG. 6 is an exploded perspective view of the sub-door.
FIG. 7 is an exploded perspective view of a panel assembly that is one component of the sub-door.
FIG. 8 is a rear perspective view of the panel assembly.
FIG. 9 is a cross-sectional view illustrating an upper end of the panel assembly.
FIG. 10 is a cross-sectional view illustrating one end of the panel assembly.
FIG. 11 is a front perspective view of a support frame that is one component of the sub-door.
FIG. 12 is a rear perspective view of the support frame that is one component of the sub-door.
FIG. 13 is a rear perspective view illustrating an upper frame of the support frame.
FIG. 14 is a front perspective view of a frame cover that is one component of the sub-door.
FIG. 15 is a view illustrating a state in which an inner cover is separated from the support frame.
FIG. 16 is a view illustrating an arranged state of the inner cover and a cable.
FIG. 17 is a cross-sectional view illustrating a connection state of the cable and a PCB within the sub-door
FIG. 18 is an exploded perspective view illustrating an arrangement of a cable and a cover sheet according to another embodiment.
FIG. 19 is a cross-sectional view illustrating a connection state of the cable and a PCB within a sub-door according to another embodiment.
FIG. 20 is a cross-sectional view illustrating a connection state of a cable and a PCB within a sub-door according to further another embodiment.

### DETAILED DESCRIPTION OF THE EMBODIMENTS

Hereinafter, detailed embodiments will be described in detail with reference to the accompanying drawings.

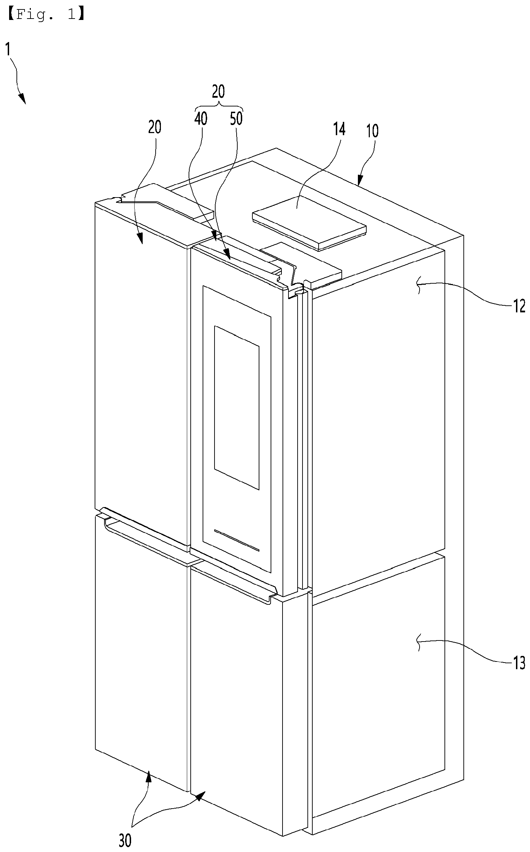

FIG. 1 is a perspective view of a refrigerator according to an embodiment.

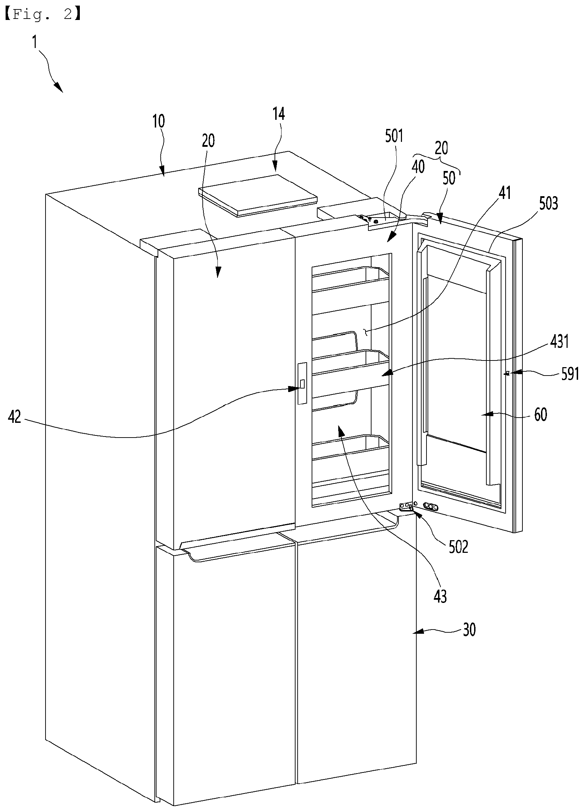

Referring to FIGS. 1 and 2, a refrigerator 1 according to a first embodiment of the present invention includes a cabinet 10 defining a storage space and a door that opens or closes the storage space. Here, an outer appearance of the refrigerator 1 may be defined by the cabinet 10 and the door

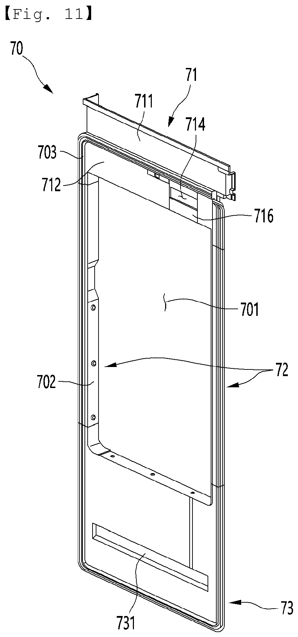

The inside of the cabinet 10 is partitioned into upper and lower portions by a barrier (see FIG. 11). A refrigerating compartment 12 may be defined in the upper portion of the cabinet 10, and a freezing compartment 13 may be defined in the lower portion of the cabinet 10.

Also, a control unit 14 for controlling an overall operation of the refrigerator 1 may be disposed on a top surface of the cabinet 10. The control unit 14 may be configured to control a cooling operation of the refrigerator as well as electric components for selective viewing and screen output of a see-through part 611.

The door may include a refrigerating compartment door and a freezing compartment door 30. The refrigerating compartment door 20 may be opened and closed by rotating an opened front surface of the refrigerating compartment 12, and the freezing compartment door 30 may be switched by rotating an opened front surface of the freezing compartment 13.

Also, the refrigerating compartment door 20 may be provided in a pair of left and right doors. Thus, the refrigerating compartment 12 is shielded by the pair of doors. The freezing compartment door 30 may be provided in a pair of left and right doors. Thus, the freezing compartment 13 may be opened and closed by the pair of doors. Alternatively, the freezing compartment door 30 may be withdrawable in a draw type as necessary and provided as one or more doors.

Although a refrigerator with a French type door, in which a pair of doors rotate to open and close one space, is applied to a bottom freezer type refrigerator, in which the freezing compartment 13 is provided at a lower portion, is described as an example in this embodiment, the present invention may be applied to all types of refrigerators including door without being limited to shapes of the refrigerators.

At least one door may be provided so that the inside of the refrigerator is visible through the door. A see-through part 611 that is an area, through which the storage space in the rear surface of the door and/or the inside of the refrigerator are seen, may be provided in the refrigerating compartment door 20. The see-through part 611 may constitute at least a portion of a front surface of the refrigerating compartment door 20. The see-through part 611 may be selectively transparent or opaque according to user's manipulation. Thus, foods accommodated in the refrigerator may be identified through the see-through part 611.

Also, although the structure in which the see-through part 611 is provided in the refrigerating compartment door 20 is described as an example in this embodiment, the see-through part 611 may be provided in various different types of refrigerator doors such as the freezing compartment door 30 according to a structure and configuration of the refrigerator.

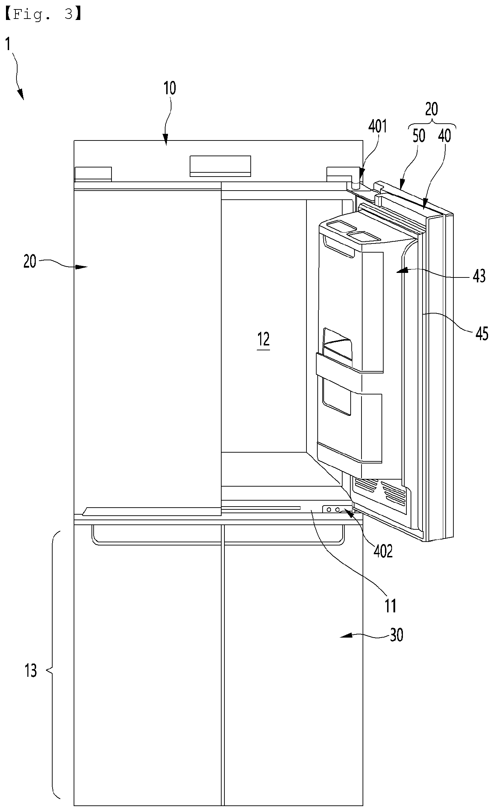

FIG. 2 is a perspective view of the refrigerator with a sub-door opened. Also, FIG. 3 is a perspective view of the refrigerator with a main door opened.

As illustrated in the drawings, the refrigerating compartment door 20, which is disposed at the right side (when viewed in FIG. 3), of the pair of refrigerating compartment doors 20 may be doubly opened and closed. In detail, the refrigerating compartment door 20, which is disposed at the right side, may include a main door 40 that opening and closing the refrigerating compartment 12 and a sub-door 50 rotatably disposed on a main door 40 to open and close an opening defined in the main door 40.

The main door 40 may have the same size as that of the refrigerating compartment door 20, which is disposed at the left side (when viewed in FIG. 1), of the pair of refrigerating compartment doors 20. The main door 40 may be rotatably mounted on the cabinet 10 by an upper hinge 401 and a lower hinge 402 to open at least a portion of the refrigerating compartment door 12.

Also, an opening 41 that is opened with a predetermined size is defined in the main door 40. A door basket 431 may be mounted on the rear surface of the main door 40 as well as the inside of the opening 41. Here, the opening 41 may have a size that occupies most of the front surface of the main door 40 except for a portion of a circumference of the main door 40.

A storage case 43 may be provided on the rear surface of the main door 40. A plurality of door baskets may be disposed in the storage case 43. When the sub-door 50 is opened, the storage case 43 may have a structure that is accessible through the opening 41. Also, the storage case 43 may be provided with a case door to access the inside of the storage case from the rear surface of the main door 40.

Also, a main gasket 45 may be disposed on a circumference of the rear surface of the main door 40 to prevent cool air within an internal space of the cabinet 10 from leaking when the main door 40 is opened. The sub-door 50 may be rotatably mounted on the front surface of the main door 40 to open and close the opening 41. Thus, the sub-door 50 may be opened to expose the opening 41.

The sub-door 50 may have the same size as the main door 40 to cover the entire front surface of the main door 40. Also, when the sub-door 50 is closed, the main door 40 and the sub-door 50 may be coupled to each other to provide the same size and configuration as those of the left refrigerating compartment door 20. Also, a sub gasket 58 may be disposed on the rear surface of the sub-door 50 to seal a gap between the main door 40 and the sub-door 50.

A panel assembly 60 through which the inside of the refrigerator is selectively visible and on which a screen is capable of being output is provided at a center of the sub-door 50. Thus, even though the sub-door 50 is closed, the inside of the opening 41 may be selectively visible, and also an image inside the opening 41 may be output. The see-through part 21 may be a portion of the sub-door 50, through which the inside of the refrigerator 1 is visible. However, the see-through part 21 may not necessarily match the entirety of the panel assembly 60.

The panel assembly 60 may be configured to be selectively transparent or opaque according to user's manipulation. Thus, only when the user desires, the transparent panel assembly 60 may be transparent so that the inside of the refrigerator 1 is visible, otherwise, be maintained in the opaque state. Also, the panel assembly 60 may output a screen or image in the transparent or opaque state.

In the embodiment, the panel assembly 60 is configured to shield an opened portion of the sub-door 50. However, according to types of the door, even when one door is configured as in the right door 20 of the refrigerating chamber 12, an opening may be formed in the door 20, and the transparent panel assembly may be mounted to shield the opening of the door 20. That is, it is noted that the panel assembly 60 may be applied to all types of doors, through which an opening is formed, regardless of the shape of the refrigerator and the shape of the door.

A sub upper hinge 501 and a sub lower hinge 502 may be respectively provided on upper and lower ends of the sub-door 50 so that the sub-door 50 is rotatably mounted on the front surface of the main door 40. Also, a restraint device 591 may be provided on the sub-door 50. A locking unit 42 may be provided on the main door 40 to correspond to the restraint device 591. Thus, the sub-door 50 may be maintained in the closed state by the coupling between the restraint device 591 and the locking unit 42. When the coupling between the opening device 59 and the locking unit 42 is released by manipulation of an opening device 529 provided at a lower end of the door, the sub-door 50 may be opened.

Hereinafter, a structure of the sub-door 50 will be described in more detail with reference to the accompanying drawings.

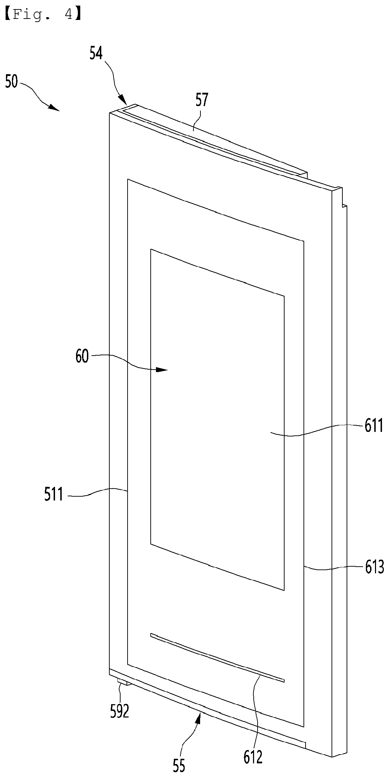

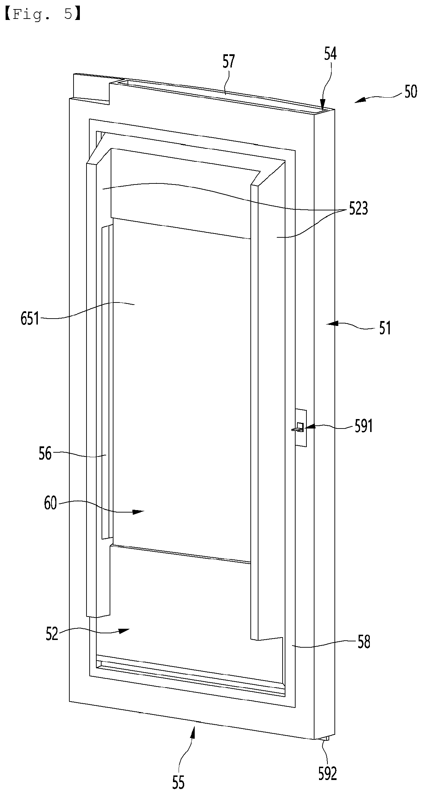

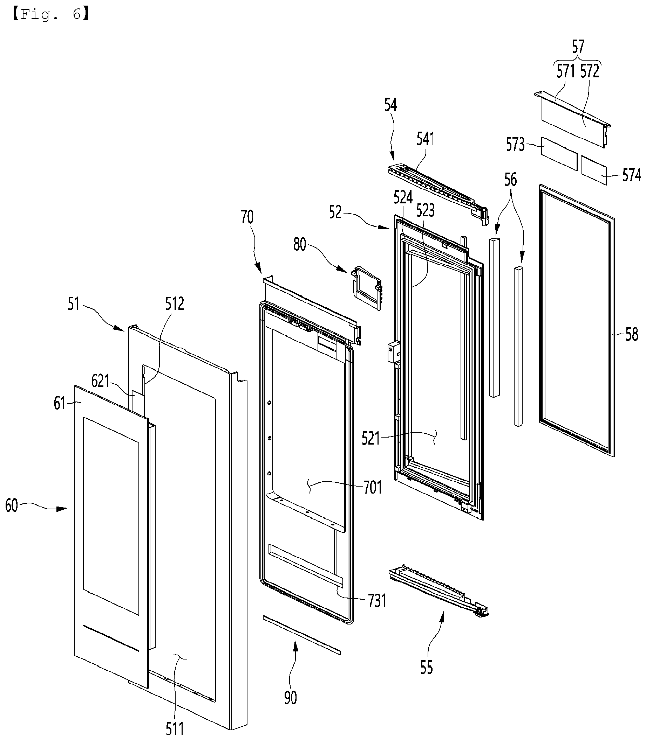

FIG. 4 is a perspective view of the sub-door when viewed from a front side. Also, FIG. 5 is a perspective view of the sub-door when viewed from a rear side. Also, FIG. 6 is an exploded perspective view of the sub-door.

As illustrated in the drawings, the sub-door 50 may include an outer plate 51 defining an outer appearance of the sub-door 50, a door liner 52 mounted to be spaced apart from the outer plate 51, the panel assembly 60 mounted on an opening of the outer plate 51 and the door liner 52, and upper and lower cap decorations 54 and 55 defining the top and bottom surfaces of the sub-door 50. The above-described constituents may be coupled to define the whole outer appearance of the sub-door 50.

The outer plate 51 may constitute an outer appearance of the front surface of the sub-door 50 and a portion of a peripheral surface of the sub-door 50 and be made of a stainless steel material. The outer plate 51 may constitute a portion of the outer appearance of the sub-door 50 as well as the front surface of the sub-door 50. Also, the outer plate 51 may be made of the same material of the front surface of each of the refrigerating compartment door 20 and the freezing compartment door 30. Various surface treatments such as coating or film attachment so as to realize anti-fingerprint coating, hair lines, colors, or patterns may be performed on the front surface of the outer plate 51.

Also, a plate opening 511 may be defined at a center of the outer plate 51. Here, the plate opening 511 may be shielded by the panel assembly 60. Also, since the inside of the refrigerator 1 is visible through the panel assembly 60 that shields the plate opening 511, an internal region of the plate opening 511 may be referred to as the see-through part 611.

A bent plate part 512 that is bent backward may be disposed on a peripheral surface of the plate opening 511. The bent plate part 512 may be disposed along a circumference of the plate opening 511 and extend by a predetermined length so as to be inserted into and fixed to a plate accommodating groove 703 of a frame 70 to be described below.

Both surfaces of the outer plate 51 may be bent to define an outer appearance of a side surface of the sub-door 50. Both ends of the outer plate 51 may be coupled to the door liner 52. Also, upper and lower ends of the outer plate 51 may be coupled to the upper cap decoration 54 and the lower cap decoration 55, respectively. An insulator 53 may be filled inside the outer plate 51, the door liner 52, the upper cap decoration 54, and the lower cap decoration 55.

The door liner 52 defines the rear surface of the sub-door 50 and has a door liner opening 521 in the area on which the panel assembly 60 is disposed. Also, a sub gasket 58 for sealing a gap between the sub-door 50 and the main door 40 may be mounted on the rear surface of the door liner 52.

Also, a door light 56 may be provided on each of both sides of the door liner opening 521. The door light 56 may illuminate the rear surface of the sub-door 50 and a rear side of the panel assembly 60.

Thus, when the door light 56 is turned on, the inside of the storage case 43 may be brightened, and thus, the inside of the refrigerator may be more brightened up than the outside of the refrigerator so that a rear space of the sub-door 50 may be visible through the panel assembly 60.

Also, if the door light 56 is turned on when the panel assembly 60 outputs the screen, the panel assembly 60 may function as an auxiliary backlight to allow the screen to be clearer.

The door light 56 may be mounted on the light mounting part 523 disposed on the rear surface of the sub-door 50. The light mounting part 523 may be disposed on the door liner 52 to protrude rearward along each of both left and right ends of the liner opening 521. Here, the light mounting part 523 may be disposed further behind the panel assembly 60, protrude backward, and pass through the opening 41 in a state in which the sub-door 50 is closed so that the light mounting part 523 is accommodated in the storage case 43. Also, the light mounting parts 523 may be opened in a direction facing each other, and the door lights 56 may be mounted inside the opened sides to irradiate light in the direction facing each other.

The upper cap decoration 54 may define a top surface of the sub-door 50 and be coupled to upper ends of the outer plate 51 and the door liner 52. The top surface of the upper cap decoration 54 is opened so that a decoration opening 541 communicating with an upper space of the panel assembly 60 is formed, and is shielded by a decoration cover 57.

The decoration cover 57 may include a shielding part 571 that shields the decoration opening 541 and a PCB mounting part 572 extending downward from a bottom surface of the shielding part 571. The PCB mounting part 572 may be mounted with PCBs 573 and 574 for an operation the panel assembly 60 and electrical components inside the sub-door 50. The PCBs 573 and 574 may be configured in at least one module form and may be provided in the PCB accommodating space 710 above the sub-door 50.

Here, an inner space of the sub-door 50 except for the PCB accommodating space 710 communicating with the decoration opening 541 may be filled with an insulator 53.

The lower cap decoration 55 may define a bottom surface of the sub-door 50 and be coupled to lower ends of the outer plate 51 and the door liner 52. Also, the lower cap decoration 55 may be provided with a manipulation device 592 that opens the sub-door 50. Also, the lower cap decoration 55 may be further provided with a handle groove that is recessed upward and into which a user's hand is inserted during the rotation operation for the opening of the sub-door 50.

The panel assembly 60 may be disposed between the outer plate 51 and the door liner 52. Also, the panel assembly 60 may be configured to shield the plate opening 511 and the door liner opening 521. Also, the panel assembly 60 may be selectively manipulated to one state of transparent, translucent, opaque, and screen, i.e. image, output states by the user.

Thus, the user may selectively see through the inner space of the sub-door 50 through the panel assembly 60 and see the screen output through the panel assembly 60.

The frame 70 configured to support the panel assembly 60 is mounted on a circumference of the plate opening 511 of the outer plate 51. The panel assembly 60 may be maintained in the fixed and mounted state by the frame 70. Particularly, a front surface of the outer plate 51 and a front surface of the panel assembly 60 may be disposed on the same extension line so that a front surface of the sub-door 50 has a sense of unity, i.e. is smooth or free of steps.

A frame opening 701 is defined at a center of the frame 70. The frame opening 701 has a size somewhat less than that of the plate opening 511 and has a structure in which the panel assembly 60 is seated thereon. In the state in which the panel assembly 60 is mounted on the frame 70, the front surface of the panel assembly 60 may shield the plate opening 511 and be exposed forward. A rear surface of the panel assembly 60 may shield the liner opening 521 and be exposed backward.

Also, the frame 70 may have a coupling structure with the outer plate 51. Here, the outer plate 51 and an end of the panel assembly 60 may be mounted on the inner frame 52 in a state in which the outer plate 51 and the end of the panel assembly 60 are closely attached to each other. Thus, when the sub-door 50 is viewed from the front side, an end of the outer plate 51 and a periphery of the panel assembly 60 are in close contact with each other, so that a gap between the outer plate 51 and the panel assembly 60 is rarely seen or is seen in a form of a line, and the outer appearance of the front surface may be seen as having senses of continuity and unity.

The panel assembly 60 may have a size that is enough to cover the plate opening 511 and the liner opening 561 inside the sub-door 50. Also, the see-through part 611 may be provided in the transparent panel assembly 60 so that the inner space of the refrigerator is selectively visible, and a screen is outputted.

Also, the front surface of the panel assembly 60, which is exposed forward through the outer plate 51, may include the see-through part 611 through which the inside of the panel assembly 60 is visible and on which a screen is output, a bezel 613 provided to be opaque along a circumference of the see-through part 611, and an auxiliary output part 612 through which light is transmitted from a lower side of the see-through part 611.

In detail, the bezel 613 may be disposed on a circumference of a front panel 61 defining the front surface of the panel assembly 60. The bezel 613 may be printed with an opaque color such as black, and components disposed behind the front panel 61 may be covered so as not to be exposed to the outside.

Also, a central area on which the bezel 613 is not disposed may be the see-through part 611, and the see-through part 611 may have a size corresponding to a position corresponding to the display 63. Thus, the see-through part 611 defines an area through which the inside of the refrigerator is visible and defines an area on which the screen is output when the display 63 operates. Thus, the see-through part 611 may be referred to as an output part, a visualization part, and a visualization area.

Also, the auxiliary output part 612, which is narrowed in a vertical direction and extends lengthily in a horizontal direction, may be disposed below the see-through part 611. The auxiliary output part 612 may also be provided to allow light to be transmitted because the bezel 613 is not provided. Thus, information may be displayed, or an operation state of the refrigerator 1 may be displayed by the transmitted light. For example, the see-through part 611 may display a voice recognition state, a touch or note operation input state, an internal temperature, a time setting state, and the like and may be displayed as a partial emission area such as a bar graph. In addition, while the partial emission area moves, the see-through part 611 may be dynamically displayed. Since the auxiliary output part 612 is displayed in the form of a line, the auxiliary output part 612 may be referred to a display.

Hereinafter, a structure of the panel assembly will be described in more detail with reference to the accompanying drawings.

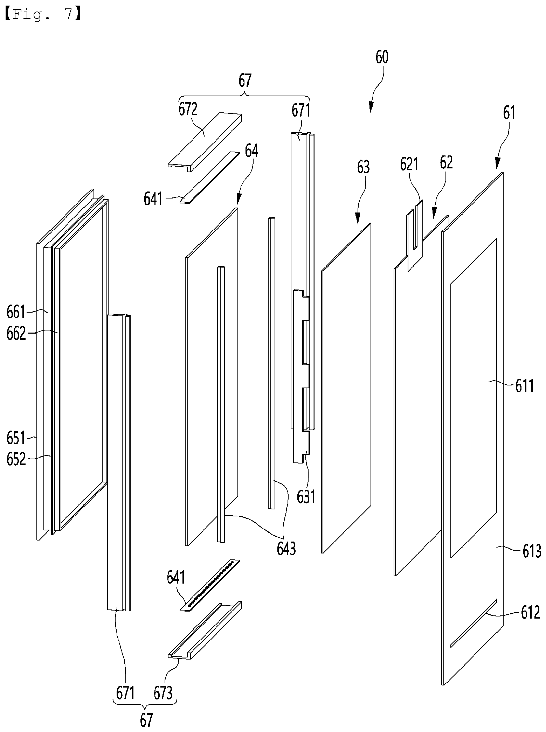

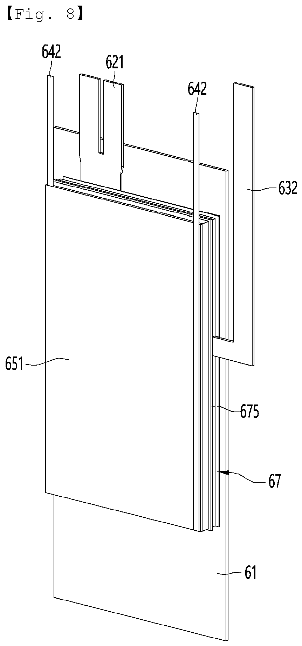

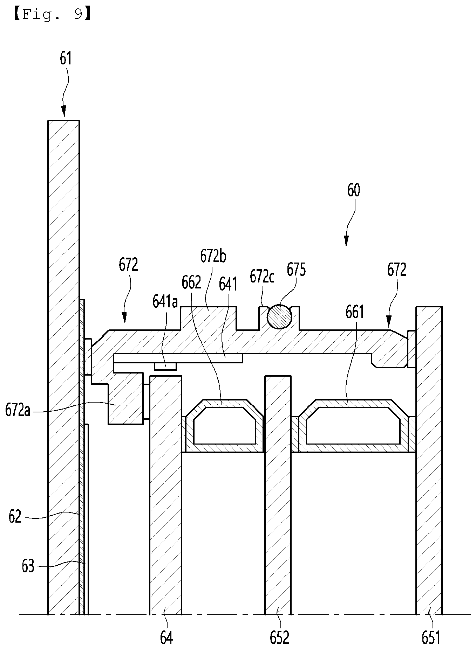

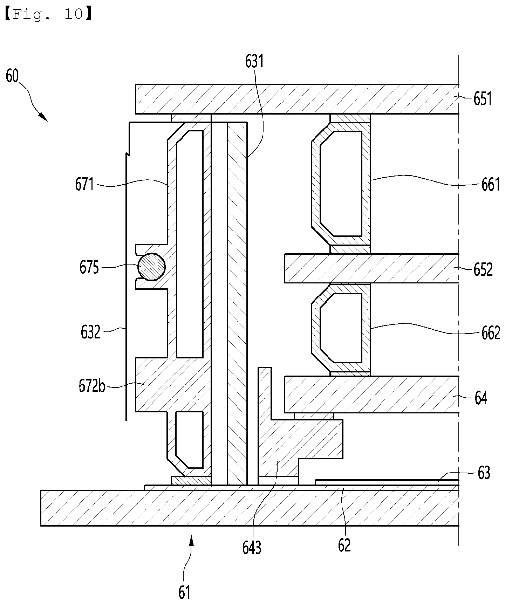

FIG. 7 is an exploded perspective view of the panel assembly that is one component of the sub-door. Also, FIG. 8 is a rear perspective view of the panel assembly. Also, FIG. 9 is a cross-sectional view illustrating an upper end of the panel assembly. Also, FIG. 10 is a cross-sectional view illustrating one end of the panel assembly.

As shown in the drawings, the panel assembly 60 may be constituted by a plurality of plate-shaped panels, and each of the panels may be spaced a predetermined intervals from each other by at least one spacer to constitute one assembly.

In detail, the panel assembly 60 may have an outer appearance that is defined by the front panel 61 and the rear panel 651, which define the front and rear surfaces of the transparent panel assembly 60, and an outer frame 67 connecting the front panel 61 to the rear panel 651.

The front panel 61 may be made of a transparent material (e.g., blue glass) that defines an outer appearance of the front surface of the panel assembly 60. The front panel 61 may have a size corresponding to that of the plate opening 511 and may have a size greater than that of the frame opening 701. Thus, the rear surface of the front panel 61 may be supported by the frame 70. Also, in a state in which the panel assembly 60 is mounted, an end of the front panel 61 may be in contact with an end of the plate opening 511, and the plate opening 511 and a circumference of the front panel 61 may be in contact with each other.

In detail, the circumference of the front panel 61 may further protrude outward from the rear panel 651, i.e. the front panel 61 may be larger than the rear panel 651 or than the frame opening 701. Thus, the circumference of the front panel 61 defining the front surface of the panel assembly 60 may further extend to the outside of the frame opening 701 and thus may be stably supported by the frame 70. The rear panel 651 as well as the outer frame 67 may be inserted into the frame opening 701.

Also, the frame 70 may be coupled to the panel assembly 60 by coupling the outer frame 67 to a coupling member such as a screw. Thus, the circumference of the panel assembly 60 may be supported by the frame 70, and simultaneously, the frame 70 may be coupled to the outer frame 67 so that the heavy panel assembly 60 is maintained in a stably fixed and mounted state even when the sub-door 50 is opened and closed.

A touch screen bonding (TSB) 62 may be disposed on the rear surface of the front panel 61. The touch screen 62 may have a transparent film shape and be attached to the rear surface of the front panel 61. Thus, even when the area of the see-through part 611 is visualized, or the screen is output on the display 63, the touch screen 62 may not affect the output of the screen. The touch screen 62 may be configured to sense user's touch manipulation and may be referred to as a touch sensing device or a touch sensor.

The touch screen 62 may have a size that is at least equal to or larger than that of the see-through part 611 or the display 63. Thus, when the user touches the area of the see-through part 611, i.e., the screen output area of the front panel 61 of the display 63, the screen output area may be sensed by the touch screen 62, and thus, information may be input and displayed according to the sensed position.

A touch cable 621 connected to the touch sensor 62 may be disposed on an outer end of the front panel 61. The touch cable 621 may connect the touch screen 62 to the PCB 573 above the sub-door 50. That is, the PCB 573 spaced apart from the touch screen 62 and the touch screen 62 may be connected to each other by the touch cable 621.

Also, the touch cable 621 may be provided as a flexible film type cable such as a flexible flat cable (FFC) or a flexible print cable or flexible print circuit board (FPC). A printed circuit may be printed on the touch cable 621 to constitute at least a portion of the PCB 573.

The touch cable 621 may be connected to the touch screen 62 to extend upward. Also, the touch cable 621 may be configured so that a wire is disposed on a base made of a resin material such as a film and may extend upward along the rear surface of the front panel 61. The touch cable 621 may be flexibly bent so that the touch cable 601 has a thin thickness and a wide width like a sheet.

Also, the touch cable 621 may have a shape such as a film or a sheet and thus may have a structure in which an end of the touch cable 621 is easily connected to a connector 573a of the PCB 573 when connected to the PCB 573. In addition, the touch cable 621 may be disposed along the rear surface of the front panel 61 and disposed along a wall surface of the inner space of the sub-door 50 to efficiently arrange the space inside the sub-door 50.

In addition, not only the touch cable 621, but also the display cable 632 connected to the display 63 and the light cable 642 connected to the display light 641 may have the same structure. All of the cables 621, 632, 642, each of which has a flat cable shape as described above, may extend up to an upper end of the panel assembly 60 and may be guided to the PCB accommodating space 710 defined in the upper end of the sub-door 50 having a thin width and wide width. In addition, a simple structure connected to the PCB 573 disposed above the sub-door 50 may be provided.

The display 63 may be disposed on the rear surface of the front panel 61 or on the rear surface of the touch screen. The display 63 may be configured to output a picture or an image through the see-through part 611 and may have a size corresponding to that of the see-through part 611. The display 63 may be provided in the form of a module on which a scree is capable of being output. Also, the display 62 may be transparent so that the user sees the inside through the display 62 when the screen is not outputted. Thus, the display 63 may be referred to as a transparent display and may have various shapes.

A source board 631 may be disposed on one end of both left and right sides of the display 63. The source board 631 may be configured to output a screen through the display 63 and connected to the display 63 and thus provided in an assembled state. Also, a portion of the source board 631 may also have a flexible film type cable structure.

Also, the source board 631 may be disposed inside the outer frame 67. The source board 631 may be disposed inside a side part 671 that defines each of left and right sides of the panel assembly 60 of the outer frame 67. Thus, the source board may be disposed so as not to be exposed through the see-through part.

The source board 631 may be connected to the display cable 632. The display cable 632 may have a flexible and flat structure like the touch cable 621 and also have a structure that is freely bendable.

The display cable 632 may be bent to extend along the circumferential surface of the panel assembly 60, i.e., be bent so that an end thereof extends upward from the transparent panel assembly 60. Thus, the display cable 632 may be coupled to the PCB 573 inside the PCB accommodating space defined in the upper end of the sub-door 50.

A first spacer 643 may be provided on each of both left and right sides of the display 63. The first spacer 643 may allow the display 63 and the light guide plate 64 to be maintained at a set distance. Also, the first spacer 643 may have a rod shape extending from an upper end to a lower end of the display 63 and may be made of aluminum.

The light guide plate 64 may be disposed behind the display 63 and be seated on the first spacer 643 so as to be spaced a predetermined distance from the display 63. The light guide plate 64 is configured so that light irradiated from the display light 641 is diffused or scattered to illuminate the display 63 at the rear side. For this, the light guide plate 64 may have a plate shape having a size equal to or somewhat greater than that of the display 63. The display light 641 may be disposed at a position corresponding to each of upper and lower ends of the light guide plate 64.

The rear panel 651 may be disposed at a rear side of the light guide plate 64. The rear panel 651 may define the rear surface of the panel assembly 60 and have a size greater than that of the light guide plate and less than that of the front panel 61. Also, the rear panel 651 may have a size greater than that of the liner opening 561 to cover the liner opening 561.

A pair of second spacers 661, 661 may be disposed between the rear panel 651 and the light guide plate 64. Each of the second spacers 661 and 662 may have a frame shape, e.g. a polyangular or rectangular frame shape, and be disposed along a circumference of each of an insulation panel 652 and the rear panel 651. Also, the insulation panel 652 may be provided between the pair of second spacer 661 and 662. The insulation panel 652 may be maintained to be spaced a set interval from each of the insulation panel 652 and the rear panel 651 by the pair of second spacers 661 and 662. A double-layered insulating space may be defined by the pair of second spacers 661 and 662, the insulation panel 652, and the rear panel 651.

In detail, the second spacers 662 disposed at the front side may support each of a rear surface of the light guide plate 64 and a rear surface of the insulation panel 652. In this case, the second spacer 662 may simply support the light guide plate 64 so that the light guide plate 64 that is expanded and contracted is effectively supported. In addition, the second spacers 661 disposed at the rear side may support each of a rear surface of the heat insulation panel 652 and a front surface of the rear panel 651. Here, the second spacer 661, the insulation panel 652, and the rear panel 651 may completely adhere to each other. Thus, an insulation space is defined between the rear panel 651 and the insulation panel 652. For example, the insulation space may be defined to be vacuumed or be defined by injecting an insulating gas.

In the state in which the rear panel 651 adheres to the second spacer 66, an outer end of the rear panel 651 may further extend outward from the second spacer 66. Also, the outer frame 67 may be mounted on the outer end of the rear panel 651 so that the rear panel 651 and the front panel 61 are fixed to each other.

The outer frame 67 may have a rectangular frame shape. The outer frame 67 may connect the rear surface of the front panel 61 to the front surface of the rear panel 651 and also define the peripheral surface of the panel assembly 60.

In detail, the outer frame 67 may define a periphery of an outer portion of the panel assembly 60 and also have a connection structure that is capable of allowing the front panel 61 to be maintained at a certain distance. The outer frame 67 may include a pair of side parts 671 defining both left and right surfaces and upper and lower parts, which connect upper and lower ends of the side part 671 to each other and define top and bottom surfaces, respectively.

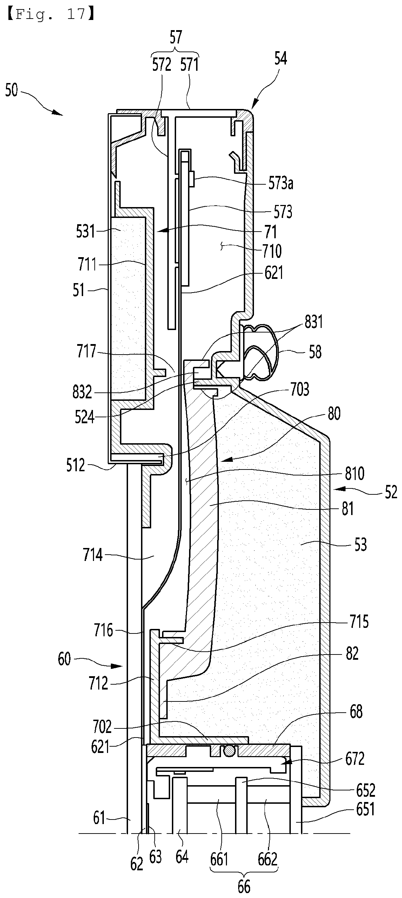

A space between the front panel 61 and the rear panel 651, i.e., an inner space of the outer frame 37 may be completely sealed by the coupling of the outer frame 67. Also, the inside of the outer frame 67 may be more sealed by a sealant 68 (see FIG. 17) applied a circumference of the outer frame 67.

That is, the overall outer appearance of the panel assembly 60 may be defined by the front panel 61, the rear panel 651, and the outer frame 67, and all of the remaining constituents may be provided in the outer frame 67. Thus, the sealing may be performed only between the outer frame 67, the front panel 61, and the rear panel 651 to completely seal the multilayered panel structure.

The panel assembly 60 may be disposed in the sub-door 50 so that the inside of the refrigerator is seen, and the screen is outputted, and also, the thermal insulation structure may be achieved in the multilayered panel structure at the minimum sealing point to secure the thermal insulation performance.

Also, the display light 641 may be mounted on inner surface of each of the upper part 672 and the lower part 673. The display lights 641 may be mounted on the upper part 672 and the lower part 673, respectively, and the light guide plate 64 may be disposed between the display lights 641.

Thus, light emitted through an LED 641a of the display light 641 may be directed to an end of the light guide plate 64 and then travel along the light guide plate 64 so that the entire surface of the light guide plate 64 emits light.

The display lights 641 disposed on the inner upper and lower ends of the panel assembly 60 may be connected to a light cable 642. The light cable 642 may have a flexible and flat shape like the touch cable 621 and the display cable 632.

The light cable 642 may be connected to the display light 641 that is mounted inside the outer frame 67 to extend to the outside of the panel assembly 60.

Also, the light cable 642 may extend along the circumference of the transparent display 63 so that the display light cable 606 is not exposed through the transparent display 63. Also, the light cable 642 may extend upward in a state of being closely attached to the rear surface of the rear panel 651. As occasion demands, the light cable 642 may be bent in the state of adhering to the rear surface of the rear panel 651 and then may be connected to a PCB 573 disposed on the upper portion of the sub-door 50.

Also, the sealant 68 may allow at least one of cables 601, 605, and 606 connected to the touch screen 62, the display panel 62, and the display light 641 within the panel assembly 60 to be accessible therethrough. That is, the sealant 68 may seal a portion that is in contact with an outer surface of each of the cables 621, 632, 642 when the cables 621, 632, 642 extend from the inside to the outside of the panel assembly 60 to prevent water or moisture from being introduced into a space through which the cables 621, 632, 642 are accessible.

A heater 675 may be disposed along an outer surface of the outer frame 67. The heater 675 may have a wire shape and be mounted on a heater mounting part 672c recessed along the outer surface of the outer frame 67. Heat generated by the heater 675 may heat the circumference of the front panel 61 along the outer frame 67 to prevent condensation from occurring.

Also, a panel assembly fixing part 672b may be disposed on the outer surface of the outer frame 67. A screw passing through the frame 70 may be coupled to the panel assembly fixing part 672b. The panel assembly 60 may be maintained in a state of being mounted on the frame 70 by the coupling of the screw.

Hereinafter, the structure of the frame 70 will be described in more detail with reference to the drawings.

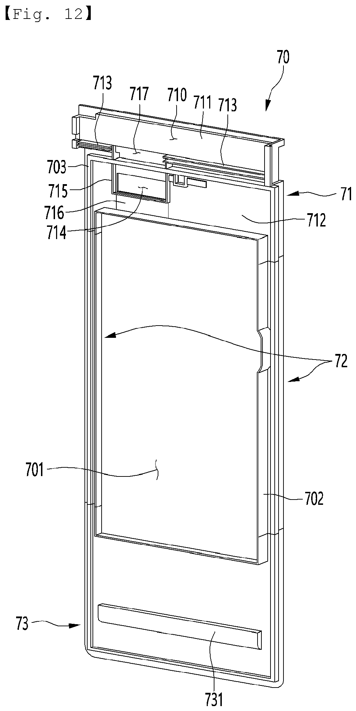

FIG. 11 is a front perspective view of a support frame that is one component of the sub-door. Also, FIG. 12 is a rear perspective view of the support frame that is one component of the sub-door.

As illustrated in the drawings, the frame 70 may be injection-molded using a plastic material and may have a rectangular frame shape so that a frame opening 701 is defined at a center thereof. Also, the frame 70 may have a predetermined width and be coupled to the outer plate 51, and simultaneously, the panel assembly 60 may be fixedly mounted on the frame 70.

The frame 70 may include an upper frame 71 defining an upper portion, a lower frame 73 defining a lower portion, and a side frame 72 connecting both ends of each of the upper frame 71 and the lower frame 73 to each other.

In detail, the frame 70 may define the overall shape of the frame 70 having the rectangular frame shape by coupling the upper frame 71, the lower frame 73, and the pair of side frames 72 to each other.

The upper frame 71 may support an upper portion of the outer plate 51 and an upper portion of the front panel 61. The upper frame 71 may define a shape of the upper portion of the frame 70 and may divide the upper space of the sub-door 50 in a front and rear direction. That is, the upper frame 71 may be provided with an upper extension part 711 extending up to the top surface of the sub-door 50, and the space above the sub-door 50 may be divided forward and backward by the upper extension part 711.

Thus, the upper side of the sub-door 50 may be divided forward and backward by the upper frame 71, and a PCB accommodating space 710 in which the PCB 573 is accommodated may be defined in a rear space. The PCB accommodating space 710 may communicate with the decoration opening 541.

The lower frame 73 may be coupled to a lower end of the side frame 72 and may be configured to support a lower portion of the outer plate 51 and a lower portion of the panel assembly 60.

The side frame 72 may define both left and right sides of the frame 70 and extend lengthily in a vertical direction to connect the upper frame 71 to the lower frame 73. That is, the side frame 72 has a structure that is capable of being coupled to both ends of the upper frame 71 and the lower frame 73.

The overall structure of the frame 70 may have the rectangular frame shape by coupling the upper frame 71, the lower frame 73, and the side frame 72 to each other. In a state in which the frame 70 is assembled, a panel assembly mounting part 702 extending backward may be disposed on a circumferential surface of the frame opening 701 defined at the center of the frame 70.

The panel assembly mounting part 702 may extends backward to have a predetermined width and may be disposed to be in contact with the circumferential surface of the panel assembly 60, that is, the outer frame 67. Also, the screw that is coupled to pass through the panel assembly mounting part 702 may be coupled to the outer frame 67 so that the panel assembly 60 is stably fixed and mounted on the frame 70.

Also, a plate accommodating groove 703 recessed along a circumference of the frame 70 may be disposed on a front surface of the frame 70. The plate accommodating groove 703 may be recessed at a position corresponding to the bent plate part 512 so that the bent plate part 512 of the outer plate 51 is inserted and may be disposed along the bent plate part 512. In addition, the bent plate part 512 may be disposed to be in contact with the circumference of the front panel 61 in the state of being inserted into the plate accommodating groove 703.

Inner and outer surfaces of the plate accommodating groove 703 may define a plane having the same height, and thus, the front circumference of the frame 70 may stably support the rear surface of the outer plate 51 corresponding to the circumferential surface of the plate opening 511. That is, each of the upper frame 71, the lower frame 73, and the pair of side frames 72 may support the outer plate 51.

In this embodiment, the frame 70 may have a structure in which the frame 70 is molded to be separated into four parts, but the frame 70 may be provided by coupling two or more components to each other, as necessary.

The lower frame 73 may have a structure that supports and fixes the outer plate 51 and the lower portion of the panel assembly 60, and also, may be provided with a display mounting part 731 on which an auxiliary display 90 that allows light to be irradiated through the auxiliary output part 612 is mounted. For example, the auxiliary display 90 may be configured so that a plurality of LEDs are arranged in a line along a substrate at a position corresponding to the auxiliary output part 612. Thus, the auxiliary display 90 may be referred to as a line display LED bar

Also, the upper frame 71 may define a space above the sub-door 50 in addition to the structure that supports and fixes the upper portion of the outer plate 51 and the panel assembly 60. In addition, the upper frame 71 may be configured to guide the cable 621 extending from the panel assembly 60.

Hereinafter the structure of the upper frame 71 will be described in more detail with reference to the drawings.

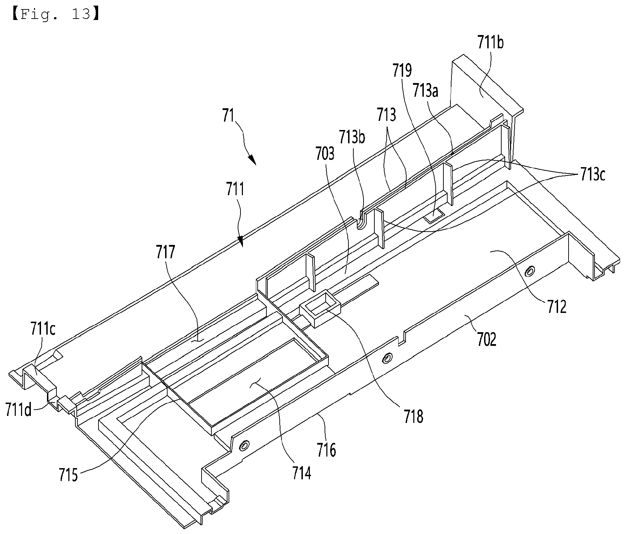

FIG. 13 is a rear perspective view illustrating the upper frame of the support frame

As illustrated in the drawings, the upper frame 71 includes a barrier 713 disposed between the upper end extension part 711 and the lower panel support part 712 and between the upper extension part 711 and the panel support part 712.

In detail, the frame 70 may be divided into an upper portion and a lower portion based on the barrier 713. The panel support part 712 may have a structure coupled to the outer plate 51 and the upper end of the panel assembly 60. Also, the upper extension part 711 defines the PCB accommodating space 710, in which the PCB 573 is disposed, in the upper end of the sub-door 50. Also, the barrier 713 may divide the panel support part 712 and the upper extension part 711 and defines a bottom surface of the PCB accommodating space 710 to prevent the insulator 53 filled into the sub-door 50 from being introduced into the PCB accommodating space 710.

In detail with reference to the structure of the panel support part 712, an upper end of the frame opening 701 and a portion of the panel assembly mounting part 702 may be disposed on a lower end of the panel support part 712. Also, both side ends of the bottom surface of the panel support part 712 may be configured to be coupled to the upper end of the side frame 72. In addition, the plate accommodating groove 703 may be defined in the panel support part 712. The plate accommodating groove 703 may be disposed along a circumference of the panel support part 712.

The panel support part 712 may have a structure that allows the cable 621 to be guided from the upper end of the panel assembly 60 to the PCB accommodating space 710.

In detail, a guide wall 715 protruding backward to define a cable accommodating space, into which the insulator 53 is not introduced, may be disposed on the rear surface of the panel support part 712. The guide wall 715 may have a rib shape having a predetermined thickness and may extend downward from the barrier 713.

The guide wall 715 may be disposed to be coupled to the frame cover 80 to be described below and may protrude to a height that is capable of being inserted into the frame cover 80. A lower end of the guide wall 715 may be spaced apart from the panel assembly mounting part 702 and may provide a space in which the frame cover 80 is mounted in the panel support part 712.

The guide wall 715 may include a vertical part extending vertically downward from each of both ends of the cable outlet 717 provided in the barrier 713 and a connection part connecting extending ends of the vertical part to each other. A horizontal width of the guide wall 715 may be greater than that of at least the cable 621 so that the cable 621 passes through the inside of the guide wall 715.

In addition, the guide wall 715 may extend downward from the barrier 713. Here, the guide wall 715 may extend to cross a rear surface of the plate accommodating groove 703. Thus, the frame cover 80 may also be mounted on the portion at which the plate accommodating groove 703 is defined.

A cable inlet 714 may be disposed inside the guide wall 715. The cable inlet 714 may be opened to pass through the panel support 712 inside the guide wall 715. Also, a length of the cable inlet 714 in a horizontal direction may have a size corresponding to the width of the cable 621. Also, the cable inlet 714 may be disposed inside the guide wall 715, i.e., at a lower end of the cable accommodating space. Accordingly, the cable inlet 714 may be prevented from interfering with the plate accommodating groove 703.

A cable guide part 716 extending up to an upper end of the panel assembly 60 may be disposed at a lower end of the cable inlet 714. The cable guide part 716 may be recessed from the front surface of the panel support part 712, and a recessed depth of the cable guide part 716 may correspond to the thickness of the cable 621 or be somewhat greater than the thickness of the cable 621. Thus, even if the front panel 61 is mounted on the frame 70, a passage in which the cable 621 is capable of being disposed may be provided between the front panel 61 and the frame 70 by the cable guide part 716. Thus, in the state in which the sub-door 50 is assembled, the cable 621 extending from a top end of the panel assembly 60 may pass through the cable guide part 716 and may be guided to an inner space of the guide wall 715 through the cable inlet 714.

Also, the cable guide part 716 may be configured to connect the cable inlet 714 to an upper end of the frame opening 701. In addition, the cable guide part 716 may be disposed at a position corresponding to a position at which the cable 621 is disposed on the top end of the panel assembly 60. Also, a width of the cable guide part 716 may correspond to a horizontal width of the cable 621 or be somewhat larger than the horizontal width of the cable 621. Also, the width of the cable guide part 716 may correspond to a horizontal width of the inner space defined by the guide wall 715.

In addition, a microphone mounting part 718 on which a microphone (not shown) that receives a user's voice signal may be disposed at a center of an upper portion of the panel support part 712. In addition, a ground hole 719 through which a wire for grounding is connected may be defined in an upper portion of the panel support part 712 by opening a portion of the plate accommodating groove 703. The wire for the grounding may be connected to a portion of the bent plate part 512 protruding through the ground hole 719.

The microphone and the wire for the grounding may have to be accessible to the inside of the PCB accommodating space 710 and may pass through a wire groove 713b defined in the barrier 713. For this, the wire groove 713b may be defined in the barrier 713 between the microphone mounting part 718 and the ground hole 719.

The cable accommodating space 810 defined by the guide wall 715 may be opened upward, and the opened top surface of the cable accommodating space 810 may be defined by the cable outlet 717. The cable outlet 717 may provide an inlet configured to so that the cable 621 is inserted into the space formed by the guide wall 715 is guided to the PCB accommodating space 710 and may be provided by cutting a portion of the barrier 713. Also, the cable outlet 717 may be referred to as a barrier opening because the cable 621 passes through the barrier 713 and is guided to the outside of the cable accommodating space 810.

The barrier 713 may cross the upper frame 71 in the horizontal direction. Also, the barrier 713 may protrude vertically from a rear surface of the upper frame 71.

The sub-door 50 may have a thickness that gradually increase from one end, to which a rotation axis of the sub hinge is coupled, to the other end thereof. Thus, the barrier 713 may have a protruding height that gradually increases as it extends from one end to the other end to correspond to the thickness of the sub-door 50.

The barrier 713 may have the form of a pair of plates spaced apart from each other in the vertical direction. Thus, a barrier coupling groove 713a may be defined by the barrier 713. The barrier coupling groove 713a may be provided so that a liner coupling part 524 protruding from the front surface of the door liner 52 is inserted. Thus, when the door liner 52 is assembled, the liner coupling part 524 protruding in a rib shape at a position corresponding to the barrier coupling groove 713a may be inserted into the barrier coupling groove 713a. The inside of the sub-door 50 may be divided vertically with respect to the barrier 713 by the coupling of the door liner 52, and a foam liquid filled in the sub-door 50 may not be introduced above the barrier 713, i.e., into the PCB accommodating space 710.

A barrier reinforcement rib 713c may be disposed on the lower barrier 713 of the pair of barriers 713. The barrier reinforcement rib 713c may extend from the rear surface of the frame 70 in the protruding direction of the barrier 713. Here, the barrier reinforcement rib 713c may extend up to an end of the barrier 713. Also, the barrier 713 may protrude downward by a predetermined height with respect to a bottom surface of the barrier 713. When a plurality of the barrier reinforcement ribs 713c are provided at regular intervals, and the foam liquid is injected to form the insulator 53, the barrier 713 may be prevented from being deformed or damaged by an injection pressure of the foam liquid.

The cable outlet 717 may be disposed in the barrier 713. The cable outlet 717 may pass through the barrier 713 vertically to communicate with a top surface of the cable accommodating space 810. That is, the cable outlet 717 may be provided to be opened by cutting a portion of the barrier 713. Also, the barrier 713 may extend at each of both left and right ends with respect to the cable outlet 717.

The upper extension part 711 may extends upward from the upper end of the barrier 713 to extend up to the top surface of the sub-door 50, that is, a bottom surface of the upper cap decoration 54. The upper extension part 711 may extend upward to define the PCB accommodating space 710. Also, side portions 711b and 711c defining both left and right surfaces of the PCB accommodating space 710 may be further disposed on both left and right sides of the upper extension part 711. A side hole 711d may be defined in each of the side portions 711c, which is adjacent to the rotation axis of the sub-door 50, of the left and right side portions 711b and 711c. The side hole 711d may allow the wire cable connected to the PCB 573 to be guided to the outside of the sub-door 50 through the rotation axis of the sub hinge.

The upper extension part 711 may be spaced apart from a front surface of the outer plate 51, and the molded insulator 531 may be disposed in a space between the outer plate 51 and the upper extension part 711. The molded insulator 531 may be made of an insulation material. For example, the molded insulator 531 may be provided as a vacuum insulator having excellent insulating performance or may be made of the same material as the insulator 53.

Also, the molded insulator 531 may be molded with a size and shape corresponding to a size of the space between the outer plate 51 and the upper extension part 711. Thus, in the process of assembling the sub-door 50, the molded insulator 531 may be inserted and mounted between the outer plate 51 and the front surface of the upper extension part 711. Even if the PCB accommodating space 710 is defined in the top of the sub-door 50 by mounting the molded insulator 531, and the insulator 53 is not filled in the PCB accommodating space 710, dew condensation may be prevented from being generated on the front surface of the outer plate 51.

Hereinafter, the frame cover 80 will be described in more detail with reference to the drawing.

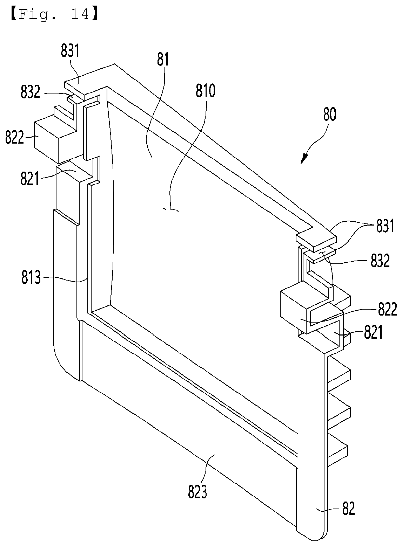

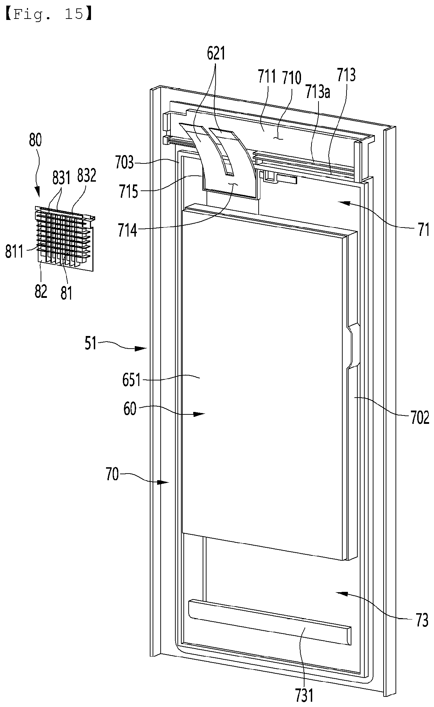

FIG. 14 is a front perspective view of the frame cover that is one component of the sub-door. Also, FIG. 15 is a view illustrating a state in which the inner cover is separated from the support frame.

As illustrated in the drawings, the frame cover 80 may be mounted on an upper portion of the frame 70, i.e., the upper frame 71. Also, the frame cover 80 may separate the inner space of the sub-door 50 into a space in which the cable 621 is disposed and a space in which the insulator 53 is disposed in the state of being mounted on the frame 70.

The frame cover 80 may be coupled to the guide wall 715 to define the cable accommodating space 810. The frame cover 80 may be configured to shield an opened rear surface of the cable accommodating space 810 defined by the guide wall 715.

The frame cover 80 may be coupled to an uneven shape of the upper frame 71 and have a shape in which the cable 621 is capable of being accommodated. Thus, the frame cover 80 may be injection-molded using a plastic material and may be molded in a complex and accurate shape.

The frame cover 80 may include a cover body 81 that shields the guide wall 715 and defines a portion of the cable accommodating space 810. The cover body 81 may be provided in a shape recessed backward, and front and top surfaces of the cover body 81 may be opened. Thus, when coupled to the upper frame 71, the cable accommodating space 810 defined by the upper frame 71 and the frame cover 80 may be opened upward to communicate with the PCB accommodating space 710.

In detail, a guide groove 813 recessed in a shape corresponding to the guide wall 715 may be defined along an inner circumference of the cover body 81. The guide groove 813 may be defined along an outer circumference of the cable accommodating space 810 and have a width corresponding to a thickness of the guide groove 813. Also, the guide groove 813 may be defined along both side surfaces and bottom surfaces of the cable accommodating space 810. Thus, when the frame cover 80 is fixed and mounted to the upper frame 71, the guide wall 715 may be inserted into the guide groove 813.

A rear surface of the cover body 81 is exposed to an inner surface of the sub-door 50, on which the insulator 53 is disposed, and be in contact with the insulator 53. Also, an outer surface of the cover body 81 may define an independent space inside the sub-door 50 so that the insulator 53 is not introduced into the cover body 81.

Also, a cover reinforcement rib 812 may be formed on a rear surface of the cover body 81. The cover reinforcement rib 812 may have a lattice shape and may be disposed over the entire rear surface of the cover body 81. Thus, when the foam liquid is injected into the sub-door 50 to form the insulator 53, the cover body 81 may be prevented from being deformed or damaged by the injection pressure of the foam liquid. Also, the cover body 81 may be provided to withstand the injection pressure of the foam liquid by having a central portion that protrudes slightly backward.

A cover edge 82 may be disposed around the cover body 81. The cover edge 82 may extend outward from the opened front surface of the cover body 81 and may be in close contact with the rear surface of the panel support part 712. An adhesive or an adhesive member may be provided on the cover edge 82 so that the frame cover 80 is firmly attached to the upper frame 71.

The cover edge 82 may be disposed along both left and right surfaces and bottom surfaces of the cover body 81 except for the opened top surface. Also, the cover edge 82 may be completely in close contact with the rear surface of the panel support part 712. In detail, the cover edge 82 on both surfaces of the cover body 81 may pass through the plate accommodating groove 703, and in order to be maintained in close contact with the panel support 712, a recess 821 and a protrusion 822 may be disposed on the cover edge 82.

The recess 821 may be recessed backward at a position corresponding to the plate accommodating groove 703 and also may be recessed in a shape corresponding to that of a rear surface of the plate accommodating groove 703. Therefore, when the frame cover 80 is mounted, the plate accommodating groove 703 may be recessed inside the recess 821 so that the frame cover 80 is maintained in the state of being in close contact with the rear surface of the panel support part 712. Also, the protrusion 822 may be disposed on an upper end of the recess 821 and protrude forward to be inserted into an upper end of the rear surface of the plate accommodating groove 703.

The cover edge 82 may be in close contact with the rear surface of the panel support part 712 by the shape of the protrusion 822 and the recess 821, and thus, the cover body 81 may be mounted to pass through the plate accommodating groove 703. Thus, the cable accommodating space 810 inside the cover body 81 may also be defined over the plate accommodating groove 703, and the cable 621 may extend to the PCB accommodating space 710 without interfering with the plate accommodating groove 703.

Also, a guide part accommodating groove 823 in which the cable guide part 716 is accommodated may be defined in the cover edge 82 below the cover body 81. The guide part accommodating groove 823 may be recessed by a corresponding depth at a position corresponding to the cable guide part 716. Therefore, when the frame cover 80 is mounted, the cover edge 82 may be in close contact with the rear surface of the panel support 712, and the cable guide part 716 may be accommodated in the guide accommodating groove 823.

Also, a pair of cover ribs 831 may be provided on an upper end of the cover body 81. The cover ribs 831 may be disposed along the upper end of the cover body 81 and be spaced apart from each other in the vertical direction. Thus, a cover rib groove 832 may be defined between the pair of cover ribs 831.

Each of the cover ribs 831 may be formed at a position corresponding to the barrier 713, and the barrier 713 may be disposed at both ends of the cover rib 831. That is, an interval between the cover rib grooves 832 may correspond to a vertical width of each of the pair of barriers 713. Thus, when the frame cover 80 is mounted, the barrier 713 may be inserted into the cover rib groove 832.

When the frame cover 80 is mounted, the barrier 713 and the cover rib 831 may be continuously connected to each other. Also, when the door liner 52 is assembled, the liner coupling part 524 protruding from the door liner 52 may be inserted into the barrier coupling groove 713a and the cover rib groove 832. Thus, a space under the barrier 713 may be provided with the insulator 53, and the introduction of the foam liquid for molding the insulator 53 into the PCB accommodating space 710 may be blocked.

When the frame cover 80 is mounted, the opened top surface of the frame cover 80 is disposed at a position corresponding to the cable outlet 717 to communicate with the inside of the PCB accommodating space 710. Thus, the cable 621 guided along the inside of the frame cover 80 may be guided to the PCB accommodating space 710 through the frame cover 80.

The cable 621 may extend to the PCB 573 disposed inside the PCB accommodating space 710. Thus, the PCB 573 that is in the state of being mounted on the decoration cover 57 may be inserted into the PCB accommodating space 710 and be connected to the cable 621.

Hereinafter, in the refrigerator 1 having the above-described structure, the arranged state of the cable 621 and the connection structure between the cable 621 and the PCB 573 will be described in more detail with reference to the drawings.

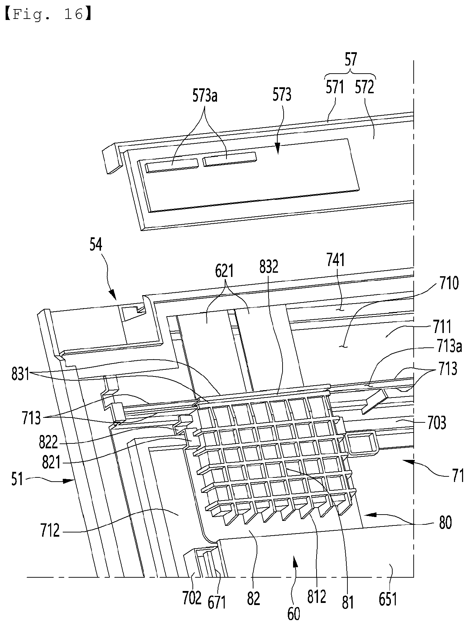

FIG. 16 is a view illustrating the arranged state of the inner cover and the cable. Also, FIG. 17 is a cross-sectional view illustrating a connection state of the cable and the PCB within the sub-door.

As illustrated in the drawings, in the state in which the panel assembly 60 and the outer plate 51 are mounted on the frame 70, the door liner 52 and the upper cap decoration 54 may be assembled to define the outer appearance of the sub-door 50.

Also, the foam liquid for molding the insulator 53 may be injected into the inside of the sub-door 50 to fill the inside of the sub-door 50. Here, the insulator 53 may be provided to fill the inside of the sub-door 50 along a circumference of the panel assembly 60.

Particularly, the insulator 53 may be disposed on the upper portion of the sub-door 50 in an outer space except for the cable accommodating space 810 defined by the coupling of the upper frame 71 and the frame cover 80. That is, the insulator 53 may be provided on the upper portion of the sub-door 50 except for the cable accommodating space 810 and the PCB accommodating space 710. Also, the molded insulator 531 may be disposed in a space between the front of the upper extension part 711 and the outer plate 51.

The PCB 573 may be inserted into the PCB accommodating space 710 through the decoration opening 541 while being mounted on the PCB mounting part 572 That is, when the decoration cover 57 is mounted to shield the decoration opening 541, the PCB 573 will be disposed inside the PCB accommodating space 710 while being mounted on the PCB mounting part 572. Here, an additional PCB such as an auxiliary PCB 574 may also be mounted on the PCB mounting part 572.

The cable 621 connected to the touch screen 62 may extend upward along a gap between the front panel 61 and the upper frame 71. That is, the cable 621 may extend upward along the cable guide part 716 disposed on the upper frame 71, and the cable 621 may be introduced into the cable guide space defined by the frame cover 80 through the cable inlet 714. In addition, the cable 621 may be introduced into the PCB accommodating space 710 through the cable outlet 717 extending upward along the guide space of the cable 621.

The cable 621 may have a flexible structure and thus may extend from the cable inlet 714 to the upper portion of the PCB accommodating space 710, in which the PCB 573 is disposed, via the cable outlet 717.

In detail, the cable 621 may extend up to the PCB 573, and the cable may be inserted into the PCB connector 573a mounted on the PCB 573. Here, the cable 621 may pass through the space between the PCB mounting part 572 and the PCB 573 to extend upward, thereby preventing an interference with elements mounted on the PCB 573. Also, the cable 621 may be bent above the PCB 573 and connected to the PCB connector 573a disposed on the upper portion of the PCB 573.

A length of the cable 621 may be formed to extend to be longer than the upper end of the PCB connector 573a. Therefore, even if the decoration cover 57 is separated, and at least a portion of the PCB 573 is drawn out of the decoration opening 741, the cable 621 may be remained in the state of being attached to the PCB connector 573a. In the state in which the decoration cover 57 is mounted, and the PCB 573 is inserted into the PCB accommodating space 710, a spare portion of the cable 621 may be accommodated in the cable accommodating space 810. Thus, the PCB 573 may be easily maintained and assembled.

In an embodiment, the structure in which the cable 621 coupled to the touch screen 62 is guided to the PCB accommodating space 710 through the cable accommodating space 810 has been described, but the light cable 642 connected to the display light 641 and the display cable 632 connected to the display 63 may also be guided to the top surface of the panel assembly 60 and then be guided to the PCB accommodating space 710 through the cable accommodating space 810.

In addition to the foregoing embodiment, the refrigerator 1 according to various embodiment may be exemplified.

In another embodiment, a structure in which a cover sheet 89 that protects a cable 621 from an insulator 53 is attached is provided. Another embodiment may be the same as the forgoing embodiment except for only a portion of an upper frame 71 and a structure of a cover sheet 89, and thus, the same constituents will be described using the same reference numerals.

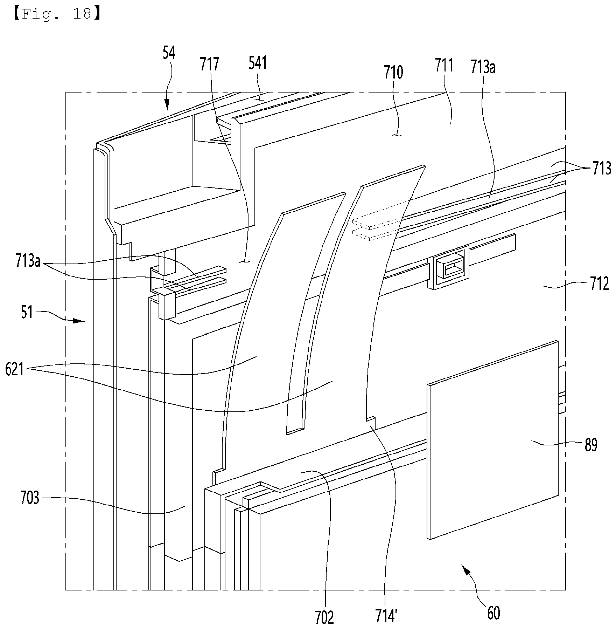

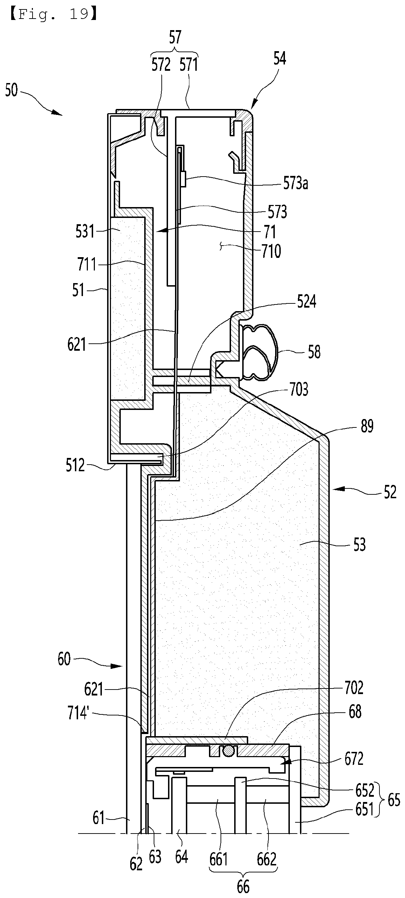

FIG. 18 is an exploded perspective view illustrating an arrangement of a cable and a cover sheet according to another embodiment. Also, FIG. 19 is a cross-sectional view illustrating a connection state of the cable and a PCB within a sub-door according to another embodiment.

As illustrated in the drawing, a sub-door 50 according to another embodiment may include an outer plate 51, a panel assembly 60, a frame 70, an upper cap decoration 54, and a door liner 52, by which an outer appearance of the sub-door 50 is defined.

Also, a PCB accommodating space 710 partitioned by coupling of the frame 70 and the door liner 52 may be defined in an upper end of the sub-door 50. A foam liquid may be injected into the sub-door 50 below the PCB accommodating space 710 to form an insulator 53. In addition, the molded insulator 531 may be provided in front of an upper extension part 711 of the upper frame 71 to thermally insulate a front side of the PCB accommodating space 710.

A decoration opening 541 may be defined in the upper cap decoration 54, and a decoration cover 57 may be mounted to shield the decoration opening 541. Also, a PCB mounting part 572 may be provided on the decoration cover 57 so that a PCB 573 is mounted.

A cable inlet 714' may be provided in the upper frame 71. The cable inlet 714' may be provided at a lower end of the panel support 712. In detail, the cable inlet 714' may be opened at a lower end of the panel support part 712, i.e., at a position that is in contact with the panel assembly mounting part 702. The cable inlet 714' may be provided in the panel assembly mounting part 702.

Thus, the cable 621 extending from a top surface of the panel assembly 60 may extend upward to pass through the cable inlet 714'. The cable 621 may extend upward in the state of being in contact with a rear surface of the upper frame 71 and then pass through a cable outlet 717 provided in a barrier 713 and be inserted into the PCB accommodating space 710.

A size of each of the cable inlet 714' and the cable outlet 717 in a horizontal direction may correspond to a width of the cable 621. Thus, a remaining portion except for the portion through which the cable 621 passes may be configured so as not to be exposed as much as possible.

Also, a cover sheet 89 may be attached to the panel support part 712 on which the cable 621 is disposed. The cover sheet 89 may be configured to be attached to a rear surface of the upper frame 71 by applying an adhesive to one surface thereof. Also, the cover sheet 89 may have a size that is capable of shielding at least a portion of each of the cable inlet 714' including the cable 621 and the cable outlet 717.

Thus, the cover sheet 89 may be attached to the panel support part 712 to shield the cable 621 in a state in which the cable 621 extends to the PCB accommodating space 710. Thus, the cable 621 may be completely shielded by the cover sheet 89. Also, the cable inlet 714' and the cable outlet 717 may be shielded to be prevented from being in contact with the cable 621 when the foam liquid is injected into the sub-door 50.

The cover sheet 89 may have a predetermined thickness, be made of a flexible material, and be effectively attached along a curved portion of a rear surface of the panel support part 712. Also, the adhesive provided on the cover sheet 89 may not be provided on an area on which the cable 621 is disposed, but be provided only around the cover sheet 89 so that the cable 621 and the cover sheet 89 do not substantially adhere to each other.

The foam liquid injected into the sub-door 50 to form the insulator 53 may be provided in a state in which the sub-door 50 is assembled. Particularly, in the state in which the cable 621 is disposed, and the cover sheet 89 is attached, the foam liquid may be injected into the sub-door 50 to protect the cable 621.

When the molding of the insulator 53 is completed, the decoration cover 57 on which the PCB 573 is mounted may be mounted, and simultaneously, an end of the cable 621 may be connected to the PCB connector 573a, and then, the PCB 573 may be inserted into the PCB accommodating space 710.

In addition to the foregoing embodiment, the refrigerator 1 according to various embodiment may be exemplified.

In another embodiment, the insulator 53 that is in the molded state may be assembled and mounted on the inside of the sub-door 50 to facilitate the arrangement of the cable 621 and to prevent the cable 621 from being damage. Another embodiment may be the same as the forgoing embodiment except for only a portion of an upper frame 71 and a structure of insulators 532 and 533, and thus, the same constituents will be described using the same reference numerals.

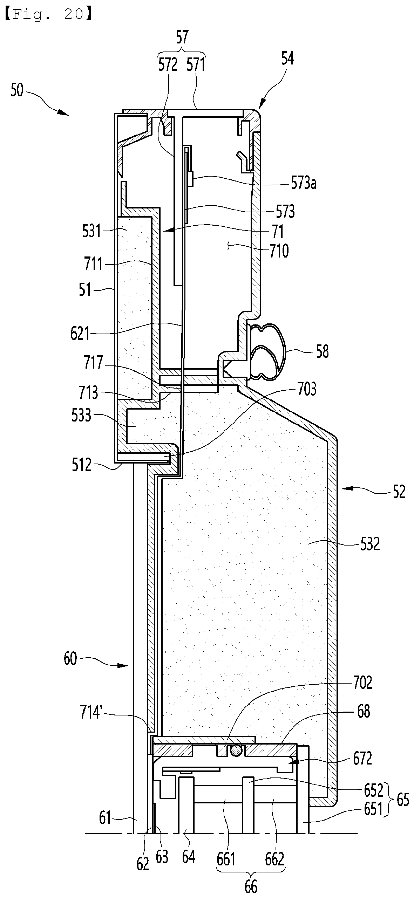

FIG. 20 is a cross-sectional view illustrating a connection state of a cable and a PCB within a sub-door according to further another embodiment.

As illustrated in the drawing, a sub-door 50 according to another embodiment may include an outer plate 51, a panel assembly 60, a frame 70, an upper cap decoration 54, and a door liner 52, by which an outer appearance of the sub-door 50 is defined.

Also, a PCB accommodating space 710 partitioned by coupling of the frame 70 and the door liner 52 may be defined in an upper end of the sub-door 50. A decoration opening 541 may be defined in an upper cap decoration 54, and the decoration opening 541 may be shielded by mounting a decoration cover 57. Also, a PCB mounting part 572 may be provided on the decoration cover 57 so that a PCB 573 is mounted.

A cable inlet 714' may be provided in the upper frame 71. The cable inlet 714' may be provided at a lower end of the panel support 712. In detail, the cable inlet 714' may be opened at a lower end of the panel support part 712, i.e., at a position that is in contact with the panel assembly mounting part 702.

Thus, the cable 621 extending from a top surface of the panel assembly 60 may extend upward to pass through the cable inlet 714'. The cable 621 may extend upward in the state of being in contact with a rear surface of the upper frame 71 and then pass through a cable outlet 717 provided in a barrier 713 and be inserted into the PCB accommodating space 710.

Also, insulators 531, 532, and 533 may be disposed on the sub-door 50. The insulators 531, 532, and 533 may be assembled and mounted on the sub-door 50 in a state of being already molded to match an inner shape of the sub-door 50.

Particularly, the insulator 53 may be mounted on the upper portion of the sub-door 50 on which the cable 621 is disposed. In detail, the cable 621 having a flat shape may extend upward in a state of being in close contact with a rear surface of the upper frame 71. Also, the insulators 532 and 533 may be inserted and mounted in a shape corresponding to a space between an upper portion of the panel assembly 60 and a lower portion of the barrier 713. Thus, the cable 621 may extend upward through the upper frame 71 and the insulators 532 and 533.

Also, the door liner 52 may be assembled in a state in which the insulators 531, 532, and 533 are inserted and mounted. Of course, in a state in which at least a portion of the insulator 532 is assembled with the door liner 52, the cable 621 may be connected to the upper frame 71

Although the structure in which the panel assembly and the PCB are provided in the sub-door is described in embodiments, the structure may be equally applied to a refrigerating compartment door provided as a single door.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A refrigerator comprising:
a cabinet (10) in which a storage space is defined; and
a door (20) configured to open and close the cabinet (10),
wherein the door (20) comprises:
an outer plate (51) which defines a front surface of the door (20) and in which a plate opening (511) is defined;
a door liner (52) which defines a rear surface of the door (20) and in which a liner opening (521) is defined;
a panel assembly (60) covering the plate opening (511), the panel assembly comprising a display (63) and/or a touch screen (62);
an insulator (53) in the door (20); and
a frame (70) disposed on a circumference of the plate opening (511) and supporting the panel assembly (60),
wherein the frame (70) comprises:
a panel assembly mounting part (702) surrounding a frame opening (701) of the frame (70) and supporting the panel assembly (60) disposed in the frame opening (701); and
a barrier (713) separating a PCB accommodating space (710) in the door (20), in which a PCB (573) is disposed, from an insulator accommodating space in the door (20), in which the insulator (53) is disposed;
**characterized in that**: the frame (70) further comprises:
a cable inlet (714) formed through the frame (70) between the frame opening (701) and the barrier (713), wherein at least one cable (621, 642, 632) extends from the panel assembly (60) through the cable inlet (714) to the PCB (753); and
a frame cover (80) mounted on the frame (70) and extending from the cable inlet (714) to the barrier (713) for covering the cable (621, 642, 632).

2. The refrigerator according to claim 1, wherein a cable guide part (716) is recessed in a front surface of the frame (70) to accommodate the cable (621, 642, 632) therein.

3. The refrigerator according to claim 1 or 2, wherein the insulator (53) is disposed between the frame cover (80) and the door liner (52).

4. The refrigerator according to any one of the preceding claims, wherein a guide wall (715) surrounds at least partially the cable inlet (14) and protrudes towards the frame cover (80).

5. The refrigerator according to any one of the preceding claims, wherein a cable outlet (717) is formed in the barrier (713) so that the cable (621, 642, 632) passes therethrough into the PCB accommodating space (710).

6. The refrigerator according to any one of the preceding claims, wherein the barrier (713) extends away from the outer plate (51) towards an inside of the door (20) and/or extends horizontally from one end to the other end of the frame (70).

7. The refrigerator according any one of the preceding claims, wherein the barrier (713) includes a pair of parallel ribs defining a barrier groove therebetween and/or the frame cover (80) includes a pair of cover ribs (831) defining a cover rib groove (832) therebetween, and
wherein the door liner (52) includes a liner coupling part (524) inserted into the barrier groove so as to be coupled to the barrier and/or into the cover rib groove (832).

8. The refrigerator according to any one of the preceding claims, wherein a bent plate part (512) of the outer plate (51) is bent towards an inside of the door (20) along a circumference of the plate opening (511), and
the frame (70) includes a plate accommodating groove (703) which is recessed and extends along the circumference of the panel assembly (60) and into which the bent plate part (512) is inserted.

9. The refrigerator according to claim 8, wherein the frame cover (80) comprises:
a cover body (81) recessed to define a space in which the cable is accommodated; and
a cover edge (82) disposed along a circumference of the cover body (81) and mounted on a rear surface of the frame (70),
wherein a recess (821) that is recessed in a shape corresponding to the plate accommodating groove (703) is defined on the cover edge (82) to be coupled to the plate accommodating groove (703)

10. The refrigerator according to any one of the preceding claims, wherein the panel assembly (60) comprises a front panel (61) configured to define a front surface of the panel assembly (60) and to cover the plate opening (511); and
the at least one cable is connected to the display (63) and/or the touch screen (62) to extend between the front panel (61) and the frame (70) to the cable inlet (714).

11. The refrigerator according to claim 10, wherein the panel assembly (60) further comprises:
a rear panel (651) spaced apart from the front panel (61) to define a rear surface of the panel assembly (60), the rear panel (651) being configured to cover the liner opening (521);
wherein the display (63) and/or the touch screen (62) is provided between the front panel (61) and the rear panel (651).

12. The refrigerator according to claim 11, wherein the panel assembly (60) further comprises:
an outer frame (67) configured to connect the front panel (61) to the rear panel (651) and defining a circumferential surface of the panel assembly (60),
a light guide plate (64) disposed between the rear panel (651) and the display (63) to illuminate the display (63); and
a display light (641) provided on the outer frame (67) to irradiate light onto the light guide plate (64),
wherein the cable further comprises a light cable (642) connected to the display light (641).

13. The refrigerator according to one of claims 10, 11 or 12, wherein the front panel (61) comprises:
a see-through part (611) at a position corresponding to the display (63); and
an opaque bezel (613) surrounding the see-through part (611),
wherein the cable is disposed to pass along the bezel (613).

14. The refrigerator according to any one of claims 10, 11, 12 or 13, wherein the frame (70) further comprises a panel support part (712) supporting the front panel (61) and extending perpendicular to the panel assembly mounting part (702) and/or in parallel to the front panel (61),
wherein the cable inlet is provided in the panel support part (712).

15. The refrigerator according to any one of the preceding claims, wherein the door (20) comprises:
a main door (40) configured to open and close the storage space and in which an opening is defined; and
a sub-door (50) configured to open and close the opening,
wherein the sub-door (50) comprises the outer plate (51), the door liner (52), the panel assembly (60), the insulator (53), and the frame (70).

## Patentansprüche

1. Kühlschrank, der Folgendes umfasst:
ein Gehäuse (10), in dem ein Vorratsraum definiert ist; und
eine Tür (20), die konfiguriert ist, das Gehäuse (10) zu öffnen und zu schließen,
wobei die Tür (20) Folgendes umfasst:
eine äußere Platte (51), die eine Vorderseite der Tür (20) definiert und in der eine Plattenöffnung (511) definiert ist;
eine Türauskleidung (52), die eine Rückseite der Tür (20) definiert und in der eine Auskleidungsöffnung (521) definiert ist;
eine Panelanordnung (60), die die Plattenöffnung (511) bedeckt, wobei die Panelanordnung eine Anzeige (63) und/oder einen Berührungsbildschirm (62) umfasst;
eine Isolierung (53) in der Tür (20); und
einen Rahmen (70), der am Umfang der Plattenöffnung (511) angeordnet ist und die Panelanordnung (60) trägt,
wobei der Rahmen (70) Folgendes umfasst:
ein Panelanordnung-Montageteil (702), das eine Rahmenöffnung (701) des Rahmens (70) umgibt und die Panelanordnung (60) trägt, die in der Rahmenöffnung (701) angeordnet ist; und
eine Barriere (713), die einen Leiterplatinen-Aufnahmeraum (710) in der Tür (20), in dem eine Leiterplatine (PCB) (573) angeordnet ist, von einem Isolierungsaufnahmeraum in der Tür (20), in dem die Isolierung (53) angeordnet ist, trennt;
**dadurch gekennzeichnet, dass** der Rahmen (70) ferner Folgendes umfasst:
einen Kabeleinlass (714), der durch den Rahmen (70) zwischen der Rahmenöffnung (701) und der Barriere (713) ausgebildet ist, wobei wenigstens ein Kabel (621, 642, 632) von der Panelanordnung (60) durch den Kabeleinlass (714) zur Leiterplatine (753) verläuft, und
eine Rahmenabdeckung (80), die am Rahmen (70) montiert ist und sich vom Kabeleinlass (714) zur Barriere (713) zum Abdecken des Kabels (621, 642, 632) erstreckt.

2. Kühlschrank nach Anspruch 1, wobei ein Kabelführungsteil (716) in der Vorderseite des Rahmens (70) ausgespart ist, um das Kabel (621, 642, 632) darin aufzunehmen.

3. Kühlschrank nach Anspruch 1 oder 2, wobei die Isolierung (53) zwischen der Rahmenabdeckung (80) und der Türauskleidung (52) angeordnet ist.

4. Kühlschrank nach einem der vorhergehenden Ansprüche, wobei eine Führungswand (715) den Kabeleinlass (14) wenigstens teilweise umgibt und zur Rahmenabdeckung (80) vorsteht.

5. Kühlschrank nach einem der vorhergehenden Ansprüche, wobei ein Kabelauslass (717) so in der Barriere (713) ausgebildet ist, dass das Kabel (621, 642, 632) dort hindurch in den Leiterplatinen-Aufnahmeraum (710) verläuft.

6. Kühlschrank nach einem der vorhergehenden Ansprüche, wobei sich die Barriere (713) von der äußeren Platte (51) weg zur Innenseite der Tür (20) erstreckt und/oder horizontal von einem Ende zum anderen Ende des Rahmens (70) verläuft.

7. Kühlschrank nach einem der vorhergehenden Ansprüche, wobei die Barriere (713) ein Paar parallel verlaufender Rippen umfasst, die zwischen sich eine Barriererille definieren, und/oder wobei die Rahmenabdeckung (80) ein Paar Abdeckungsrippen (831) umfasst, die zwischen sich eine Abdeckungsrippenrille (832) definieren, und
wobei die Türauskleidung (52) ein geradlinig verlaufendes Kopplungsteil (524) umfasst, das so in die Barriererille eingesetzt wird, dass es mit der Barriere gekoppelt wird, und/oder in die Abdeckungsrippenrille (832) eingesetzt werden kann.

8. Kühlschrank nach einem der vorhergehenden Ansprüche, wobei ein gebogenes Plattenteil (512) der äußeren Platte (51) längs eines Umfangs der Plattenöffnung (511) zur Innenseite der Tür (20) gebogen ist, und
der Rahmen (70) eine Plattenaufnahmerille (703) umfasst, die ausgespart ist und längs des Umfangs der Panelanordnung (60) verläuft, und in die das gebogene Plattenteil (512) eingesetzt wird.

9. Kühlschrank nach Anspruch 8, wobei die Rahmenabdeckung (80) Folgendes umfasst:
einen Abdeckungskörper (81), der ausgespart ist, um einen Raum zu definieren, in dem das Kabel aufgenommen wird; und
eine Abdeckungskante (82), die längs eines Umfangs des Abdeckungskörpers (81) angeordnet ist und an der Rückseite des Rahmens (70) montiert ist,
wobei eine Aussparung (821), die in einer Form ausgespart ist, die der Plattenaufnahmerille (703) entspricht, so an der Abdeckungskante (82) definiert ist, dass sie mit der Plattenaufnahmerille (703) gekoppelt wird.

10. Kühlschrank nach einem der vorhergehenden Ansprüche, wobei die Panelanordnung (60) ein vorderes Panel (61) umfasst, das konfiguriert ist, eine Vorderseite der Panelanordnung (60) zu definieren und die Plattenöffnung (511) zu bedecken; und
das wenigstens eine Kabel so mit der Anzeige (63) und/oder dem Berührungsbildschirm (62) verbunden ist, dass es zwischen dem vorderen Panel (61) und dem Rahmen (70) zum Kabeleinlass (714) verläuft.

11. Kühlschrank nach Anspruch 10, wobei die Panelanordnung (60) ferner Folgendes umfasst:
ein hinteres Panel (651), das vom vorderen Panel (61) beabstandet ist, das eine Rückseite der Panelanordnung (60) definiert, wobei das hintere Panel (651) so konfiguriert ist, dass es die Auskleidungsöffnung (521) bedeckt;
wobei die Anzeige (63) und/oder der Berührungsbildschirm (62) zwischen dem vorderen Panel (61) und dem hinteren Panel (651) vorgesehen sind.

12. Kühlschrank nach Anspruch 11, wobei die Panelanordnung (60) ferner Folgendes umfasst:
einen äußeren Rahmen (67), der so konfiguriert ist, dass er das vordere Panel (61) mit dem hinteren Panel (651) verbindet und eine Umfangsfläche der Panelanordnung (60) definiert,
eine Lichtleitplatte (64), die zwischen dem hinteren Panel (651) und der Anzeige (63) angeordnet ist, um die Anzeige (63) zu beleuchten; und
ein Anzeigelicht (641), das am äußeren Rahmen (67) vorgesehen ist, um Licht auf die Lichtleitplatte (64) auszustrahlen,
wobei das Kabel ferner ein Lichtkabel (642) umfasst, das mit dem Anzeigelicht (641) verbunden ist.

13. Kühlschrank nach einem der Ansprüche 10, 11 oder 12, wobei das vordere Panel (61) Folgendes umfasst:
ein durchsichtiges Teil (611) an einer Position, die der Anzeige (63) entspricht; und
eine lichtundurchlässige Einfassung (613), die das durchsichtige Teil (611) umgibt,
wobei das Kabel so angeordnet ist, dass es längs der Einfassung (613) verläuft.

14. Kühlschrank nach einem der Ansprüche 10, 11, 12 oder 13, wobei der Rahmen (70) ferner ein Panelträgerteil (712) umfasst, das das vordere Panel (61) trägt und senkrecht zum Panelanordnung-Montageteil (702) und/oder parallel zum vorderen Panel (61) verläuft,
wobei der Kabeleinlass im Panelträgerteil (712) vorgesehen ist.

15. Kühlschrank nach einem der vorhergehenden Ansprüche, wobei die Tür (20) Folgendes umfasst:
eine Haupttür (40), die konfiguriert ist, das Vorratsfach zu öffnen und zu schließen, und in der eine Öffnung definiert ist; und
eine zusätzliche Tür (50), die konfiguriert ist, die Öffnung zu öffnen und zu schließen,
wobei die zusätzliche Tür (50) die äußere Platte (51), die Türauskleidung (52), die Panelanordnung (60), die Isolierung (53) und den Rahmen (70) umfasst.

## Revendications

1. Réfrigérateur comportant :
une armoire (10) dans laquelle un espace de stockage est défini ; et
une porte (20) configurée pour ouvrir et fermer l'armoire (10),
dans lequel la porte (20) comporte :
une plaque extérieure (51) qui définit une surface avant de la porte (20) et dans laquelle une ouverture de plaque (511) est définie ;
une plaque extérieure (52) qui définit une surface arrière de la porte (20) et dans laquelle une ouverture de garnissage (521) est définie ;
un ensemble de panneau (60) recouvrant l'ouverture de plaque (511), l'ensemble de panneau comportant un affichage (63) et/ou un écran tactile (62) ;
un isolant (53) dans la porte (20) ; et
un châssis (70) disposé sur une circonférence de l'ouverture de plaque (511) et supportant l'ensemble de panneau (60),
dans lequel le châssis (70) comporte :
une partie de montage d'ensemble de panneau (702) entourant une ouverture de châssis (701) du châssis (70) et supportant l'ensemble de panneau (60) disposé dans l'ouverture de châssis (701) ; et
une barrière (713) séparant un espace de réception de PCB (710) dans la porte (20), dans lequel une PCB (573) est disposée, d'un espace de réception d'isolant dans la porte (20), dans lequel l'isolant (53) est disposé ;
**caractérisé en ce que** le châssis (70) comporte en outre :
une entrée de câble (714) formée à travers le châssis (70) entre l'ouverture de châssis (701) et la barrière (713), dans lequel au moins un câble (621, 642, 632) s'étend à partir de l'ensemble de panneau (60) à travers l'entrée de câble (714) jusqu'à la PCB (753) ; et
un couvercle de châssis (80) monté sur le châssis (70) et s'étendant de l'entrée de câble (714) jusqu'à la barrière (713) pour recouvrir le câble (621, 642, 632).

2. Réfrigérateur selon la revendication 1, dans lequel une partie de guidage de câble (716) est évidée dans une surface avant du châssis (70) pour recevoir le câble (621, 642, 632) dans celle-ci.

3. Réfrigérateur selon la revendication 1 ou 2, dans lequel l'isolant (53) est disposé entre le couvercle de châssis (80) et le garnissage de porte (52).

4. Réfrigérateur selon l'une quelconque des revendications précédentes, dans lequel une paroi de guidage (715) entoure au moins partiellement l'entrée de câble (14) et fait saillie vers le couvercle de châssis (80).

5. Réfrigérateur selon l'une quelconque des revendications précédentes, dans lequel une sortie de câble (717) est formée dans la barrière (713) de sorte que le câble (621, 642, 632) passe à travers celle-ci dans l'espace de réception de PCB (710).

6. Réfrigérateur selon l'une quelconque des revendications précédentes, dans lequel la barrière (713) s'étend en s'éloignant de la plaque extérieure (51) vers un intérieur de la porte (20) et/ou s'étend horizontalement d'une extrémité à l'autre extrémité du châssis (70).

7. Réfrigérateur selon l'une quelconque des revendications précédentes, dans lequel la barrière (713) inclut une paire de nervures parallèles définissant une rainure de barrière entre celles-ci et/ou le couvercle de châssis (80) inclut une paire de nervures de couvercle (831) définissant une rainure de nervure de couvercle (832) entre celles-ci, et
dans lequel le garnissage de porte (52) inclut une partie de couplage de garnissage (524) insérée dans la rainure de barrière de manière à être couplée à la barrière et/ou dans la rainure de nervure de couvercle (832).

8. Réfrigérateur selon l'une quelconque des revendications précédentes, dans lequel une partie de plaque pliée (512) de la plaque extérieure (51) est pliée vers un intérieur de la porte (20) le long d'une circonférence de l'ouverture de plaque (511), et
le châssis (70) inclut une rainure de réception de plaque (703) qui est évidée et s'étend le long de la circonférence de l'ensemble de panneau (60) et dans laquelle la partie de plaque pliée (512) est insérée.

9. Réfrigérateur selon la revendication 8, dans lequel le couvercle de châssis (80) comporte :
un corps de couvercle (81) évidé pour définir un espace dans lequel le câble est reçu ; et
un bord de couvercle (82) disposé le long d'une circonférence du corps de couvercle (81) et monté sur une surface arrière du châssis (70),
dans lequel un évidement (821) qui est évidé selon une forme correspondant à la rainure de réception de plaque (703) est défini sur le bord de couvercle (82) pour être couplé à la rainure de réception de plaque (703).

10. Réfrigérateur selon l'une quelconque des revendications précédentes, dans lequel l'ensemble de panneau (60) comporte un panneau avant (61) configuré pour définir une surface avant de l'ensemble de panneau (60) et pour recouvrir l'ouverture de plaque (511) ; et
le au moins un câble est relié à l'affichage (63) et/ou à l'écran tactile (62) pour s'étendre entre le panneau avant (61) et le châssis (70) jusqu'à l'entrée de câble (714).

11. Réfrigérateur selon la revendication 10, dans lequel l'ensemble de panneau (60) comporte en outre :
un panneau arrière (651) espacé du panneau avant (61) pour définir une surface arrière de l'ensemble de panneau (60), le panneau arrière (651) étant configuré pour recouvrir l'ouverture de garnissage (521) ;
dans lequel l'affichage (63) et/ou l'écran tactile (62) est agencé entre le panneau avant (61) et le panneau arrière (651).

12. Réfrigérateur selon la revendication 11, dans lequel l'ensemble de panneau (60) comporte en outre :
un châssis extérieur (67) configuré pour relier le panneau avant (61) au panneau arrière (651) et définissant une surface circonférentielle de l'ensemble de panneau (60),
une plaque de conduction de lumière (64) disposée entre le panneau arrière (651) et l'affichage (63) pour éclairer l'affichage (63) ; et
un éclairage d'affichage (641) agencé sur le châssis extérieur (67) pour projeter de la lumière sur la plaque de conduction de lumière (64),
dans lequel le câble comporte en outre un câble d'éclairage (642) relié à l'éclairage d'affichage (641).

13. Réfrigérateur selon l'une des revendications 10, 11 ou 12, dans lequel le panneau avant (61) comporte :
une partie transparente (611) à une position correspondant à l'affichage (63) ; et
un encadrement opaque (613) entourant la partie transparente (611),
dans lequel le câble est disposé de manière à passer le long de l'encadrement (613).

14. Réfrigérateur selon l'une quelconque des revendications 10, 11, 12 ou 13, dans lequel le châssis (70) comporte en outre une partie de support de panneau (712) supportant le panneau avant (61) et s'étendant perpendiculairement à la partie de montage d'ensemble de panneau (702) et/ou parallèlement au panneau avant (61),
dans lequel l'entrée de câble est agencée dans la partie de support de panneau (712).

15. Réfrigérateur selon l'une quelconque des revendications précédentes, dans lequel la porte (20) comporte :
une porte principale (40) configurée pour ouvrir et fermer l'espace de stockage et dans laquelle une ouverture est définie ; et
une porte secondaire (50) configurée pour ouvrir et fermer l'ouverture,
dans lequel la porte secondaire (50) comporte la plaque extérieure (51), le garnissage de porte (52), l'ensemble de panneau (60), l'isolant (53) et le châssis (70).
